Europäisches Patentamt

European Patent Office

Office européen des brevets

(19)

(11) Publication number: **0 156 140 B1**

## EUROPEAN PATENT SPECIFICATION

(12)

(45) Date of publication of patent specification: **05.06.91**  (51) Int. Cl.⁵ **G01B 5/00, G01B 7 00**

(21) Application number: **85101440.7**

(22) Date of filing: **11.02.85**

(54) **Thread measurement tool.**

(30) Priority: **17.02.84 US 581407**

(43) Date of publication of application:
**02.10.85 Bulletin 85/40**

(45) Publication of the grant of the patent:
**05.06.91 Bulletin 91/23**

(84) Designated Contracting States:
**DE FR GB IT**

(56) References cited:
**DE-A- 2 343 393        DE-A- 3 222 583
GB-A- 2 056 069        US-A- 3 047 960
US-A- 3 277 578        US-A- 3 827 154
US-A- 4 139 947        US-A- 4 184 265**

**PATENT ABSTRACTS OF JAPAN, vol. 3, no.
150 (E-158), 11th December 1979, page 70 E
158; & JP - A - 54 130 156 (KOGYO GIJUT-
SUIN) 09-10-1979**

**PATENT ABSTRACTS OF JAPAN, vol. 9, no. 9
(P-327)[1732], 16th January 1985; & JP - A -
59 157 509 (NIIGATA TEKKOSHO K.K.)
06-09-1984**

(73) Proprietor: **Tuboscope Inc.
2835 Holmes Road
Houston, Texas 77051(US)**

(72) Inventor: **Storace, Anthony
46 Princess Pine Road
Norwalk CT 06850(US)**
Inventor: **Yannella, Albert V.
342 Pond Point Avenue
Milford CT 06460(US)**

(74) Representative: **Eisenführ, Speiser & Strasse
Martinistrasse 24
W-2800 Bremen 1(DE)**

## Description

This invention relates to devices for inspection and measurement of pipe threads and, more particularly, to the inspection of pipe threads utilized in oil-drilling equipment to determine that such threads are within tolerances.

Threaded couplings and the threaded end-portions of pipes are used for joining pipes together in numerous situations ranging from applications in the home to industrial applications. In certain situations, particularly in the case of oil-drilling equipment, pipes having a relatively large diameter and long lengths are employed. Such pipes require a correspondingly large area of thread to ensure adequate strength to a threaded joint. To ensure ease of joining such pipes, and to insure that the resulting joints will have adequate strength and will not leak, it is essential that the threads be made with sufficient precision to allow the threaded end-portion of a pipe to be properly threaded into a coupling.

A problem arises with respect to the inspection process for determining that adequate precision is present in the pipe thread, namely, that the process is not accomplished as readily as would be desired and that, furthermore, not all measurement parameters can be inspected by existing inspection equipment. The parameters of a thread which are useful in determining the accuracy of fit in a joint are discussed in the American Petroleum Institute Specification 5B. These include lead error, thread height error, pitch line non-linearity, average taper and interval taper. Reference is made to pp 2 & 14 of the API Specification for a discussion of the latter two parameters. The problem is compounded in that, heretofore, more than one article of measuring equipment needed to be employed in the measurement of these parameters while no commercially available equipment appears to be available for measurement of the pitch line non-linearity.

The following U.S. Patents are exemplary of the state of the art. A portable thread measuring device for measuring the distance of a pipe thread to the end of the pipe is taught in the Horton 4,184,265. Devices for measuring taper are shown in Dietrich 3,861,047, Mittenbergs 3,047,960 and Possati 4,139,947. A device for measurement of pitch of a thread is taught in Kaifesh 3,827,154, Peterson 2,937,458, Schasteen 4,202,109 and Heslin 3,271,872. A device for gauging the shape of threads is taught in Johnson 3,318,011. Devices for measuring thread diameter are taught in Reish 3,432,935.

The foregoing problem is overcome by measuring inspection apparatus which incorporates the invention as set out in claim 1 so as to provide for the measurement and tolerance inspection of all of the foregoing parameters of pipe thread. The pre-characterizing section of claim 1 is based on US-A-4184265.

It is thus an object of the invention to provide a measurement tool which is readily attached to a pipe thread to provide a set of readings of the foregoing parameters after which the tool is readily detached from the pipe to permit use of the pipe. Such readings can be taken simultaneously. The tool is able to take a multiplicity of thread measurements within the confines of one instrument. The tool also has the advantage of taking a wide range of pipe sizes and measuring both internal and external threads. The tool is capable of very accurate readings without a good deal of operator experience since it is an automatic system once properly set on the threads and activated and is a "hands off" system. This is because the operator is not required to have direct interaction with the sensor assembly during the taking of measurements. In fact, the operator need not have any direct interaction with the tool as a whole, once installed and activated, during the measurement phase. Furthermore, the pipe being measured does not need to be in a horizontal position for reliable readings since it can be measured in situ, or in its existing position.

In accordance with the invention, the measurement tool comprises a pair of arms configured as jaws for gripping the pipe or coupling, each arm having a handle on its end. One of the jaws contacts the outside surface of the threaded portion of a pipe or coupling while the other jaw contacts the inner surface of the pipe or coupling. The tool is readily held by its handle and the jaws are readily opened and closed to facilitate manual attachment and detachment of the tool from the thread being inspected.

In one embodiment, the tool includes an assembly of sensors and probes for detecting the positions of portions of the pipe thread. The sensor assembly is mounted on one of the jaws which also serves as a base for an inclinometer. The second jaw pivotably connects with the first jaw and terminates in a pair of contacts or legs which are placed against the other surface of the pipe wall to secure the tool from wobbling. The first jaw includes a pair of contacts or legs which are spaced apart in a direction parallel to the axis of the pipe being measured so as to secure the tool from any rocking motion relative to the pipe or coupling. The two legs on the first jaw and the two legs on the second jaw work in collaboration to assure stable support of the tool on the pipe.

Average thread taper is measured by the use of an inclinometer that is mounted on the first jaw. Taper measurement requires that two measurements be taken on the pipe thread; a first in the vicinity of the top of the pipe thread and a second in the vicinity of the bottom of the pipe thread. These two readings of the inclinometer are then subtracted from one another to provide the true taper of the thread. As is well known,

2

such taper facilitates the insertion of the threaded end-portion of a pipe into a threaded coupling. Proper tolerances of such taper aids in the fitting of the pipe to the coupling.

Thread height error is obtained by a set of probes which comprise rod-shaped members slidably mounted within a cylindrical housing for movement perpendicular to the longitudinal axis of the pipe. The probes are pointed for insertion into the troughs of the threads. The probes are connected with transducers which measure such motion. In addition, each probe is mounted by a slide to the base of the first jaw so as to permit lateral, or transverse, motion in a direction generally parallel to the axis of the pipe for alignment of the terminus or tip of a probe with the low point of a trough. By use of more than one of the height measuring probes, it is possible to obtain a plurality of such measurements simultaneously for a more accurate determination of the thread height at various spaced intervals along the threaded length.

Additional probes are mounted by slides to the base of the first jaw for both longitudinal motion in a direction normal to the axis of the pipe as well as transverse motion in a direction parallel to the axis of the pipe. These additional probes are employed with transducers for measuring the transverse motion so as to obtain the value of the lead error of the thread. The probes utilized in the lead error measurement are terminated in ball (spherical) contacts which set within the troughs of the thread. The legs which support the first jaw along the thread are provided with ball contacts for insertion within the thread troughs. To this end, one of these legs is mounted in a sliding fashion to the first jaw so as to accommodate and lead error that might exist between these threads.

The non-linearity of pitch line of the thread is obtained by the use of probes displaceable in a direction normal (or radial) to the axis of the pipe which are terminated in ball-type contacts. For this purpose, it is advantageous to employ the two end legs for providing reference values of height at the ends of the base of the first jaw with the probes being utilized to provide intermediary values of radial displacement. Transducers are used to sense the displacement of the probes in the radial direction to provide a set of electrical signals representing the deviation of the pitch line from a straight line drawn between the two end legs. Such deviation is most useful in determining whether the thread of the pipe and the thread of the coupling will mate properly, or whether there will be high spots causing binding or low spots causing too loose a fitting with the ensuing loss of integrity and leakage.

A further feature in the construction of the assembly of the probes is the interleaving of the positions of the height error measurement probes with the lead error measurement probes within a plane containing the axis of the pipe so as to provide for a better distribution of the measurement sites for each of the foregoing measurements.

To facilitate the ensuing disclosure of the invention, the invention will be described with reference to taking measurements principally of the external thread of a pipe. However, it should be understood that the tool is not limited to external thread application. The tool is equally applicable to taking the same measurements on internally threaded pipe. Indeed, it is considered an important aspect of the tool that it can be used randomly for measuring internally or externally threaded pipes without any change whatsoever to the tool.

The aforementioned aspects and other features of the invention are explained in the following description taken in connection with the accompanying drawing wherein:

Figure 1 is a stylized view of the measuring tool of the invention shown attached to the threaded portion of a pipe, and being connected to electrical circuitry for processing the signals received from the tool;

Figure 2 is an enlarged fragmentary view of the tool of Figure 1. Figure 2 showing a detailed arrangement of the components of a sensor assembly of Figure 1;

Figure 3 is a sectional view of pointed probes 28C and 28E used in the thread height measurement including a transducer, the probe also being shown in Figure 2;

Figure 4 is a schematic illustration of the ball probes, such as probe 28D, used to measure the lead error, cumulative lead, and non-linearity of the pitch line.

Figure 5a is a schematic illustration of the probes on the thread area of a pipe similar to Figure 2, but in simpler form.

Figure 5b is a chart showing the various LVDTs used in the tool shown in Figure 2.

Figure 6 is a schematic illustration of the average taper measurement.

Figure 7 is a graphical illustration of an example of a theoretical pipe thread profile depicting various aspects of the thread.

Figure 8 is a graphical illustration of the same thread profile show in Figure 7, but also depicting a ball-type probe seated in the trough of the thread.

Figure 9 is a graphical illustration of a theoretical pipe thread profile showing four intervals of measurement used to determine if non-linearity of pitch line exists.

Figure 10 is a graphical illustration, (without the thread being shown) of the same four intervals of

3

measurement as in Figure 9, but in an actual pipe wherein there exists pitch line non-linearity.

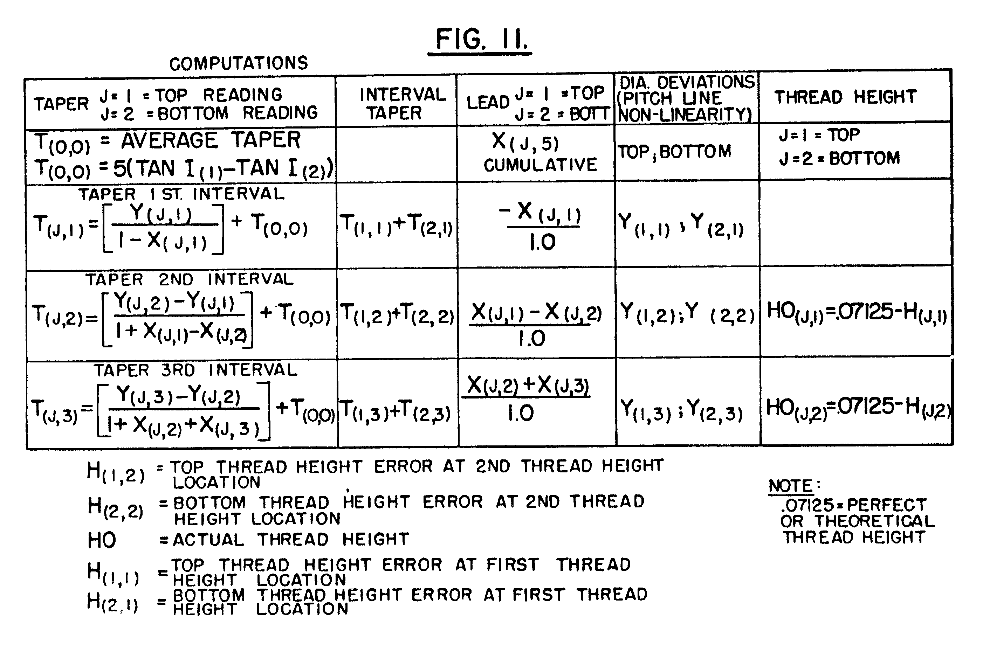

Figure 11 is a chart showing sample calculations of average taper, interval taper, lead error, non-linearity of pitch line and thread height error.

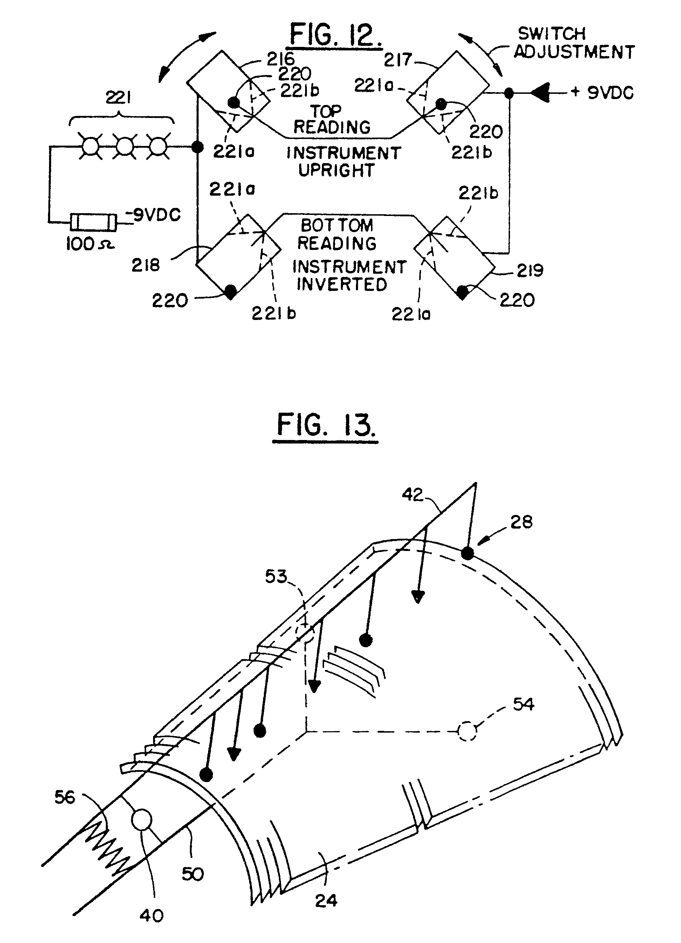

Figure 12 is a schematic illustration of an instrument to assure proper placement of the tool in the pipe.

Figure 13 is a schematic illustration of fragmentary portions of the pipe and tool showing the support arrangement of the tool when installed on an externally threaded pipe.

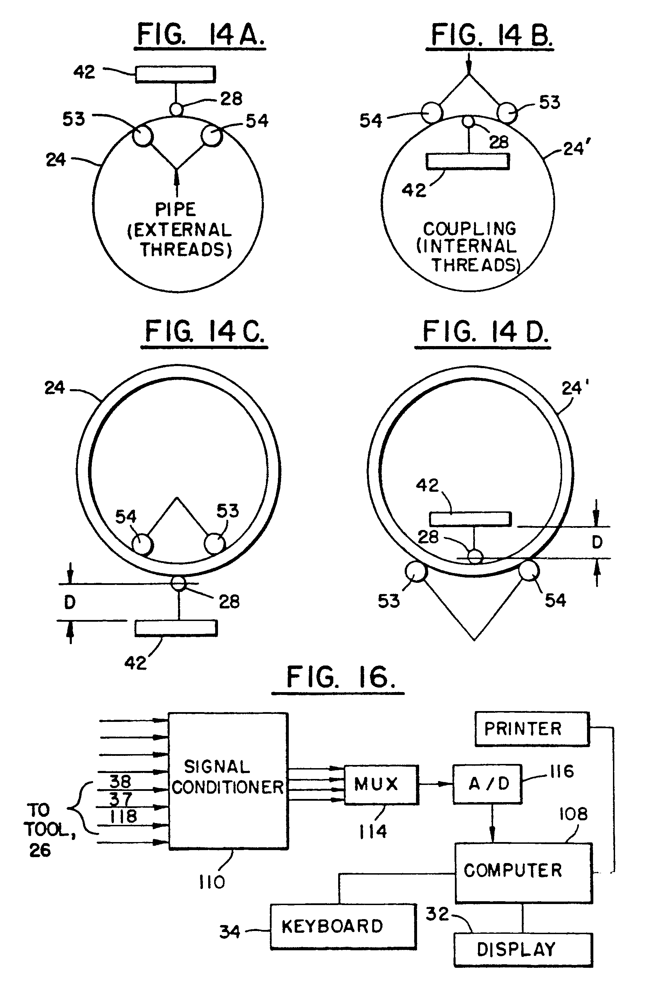

Figure 14a is a schematic illustration of the tool and pipe in Figure 13, but viewing it from the end of the pipe.

Figure 14b is a schematic illustration of the same tool as in Figure 14a, but installed on an internally threaded pipe.

Figures 14c and d are side by side views similar to Figures 14a and b, respectively, showing that there is no change of distance between the 1st jaw and probes in using the tool for external and internal threads.

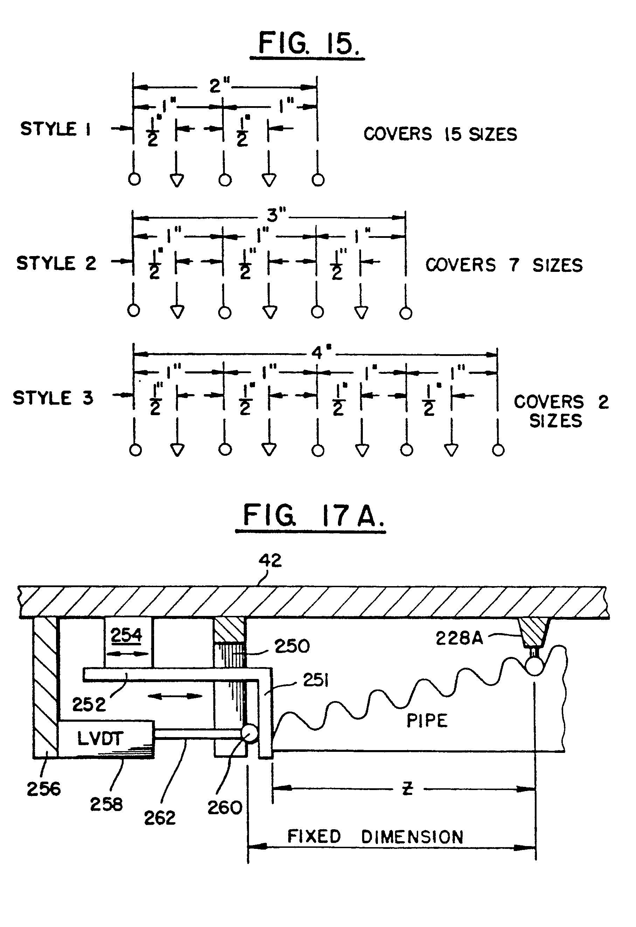

Figure 15 is a schematic illustration of three styles of tool that will cover practically all 8 roundcasing pipe sizes.

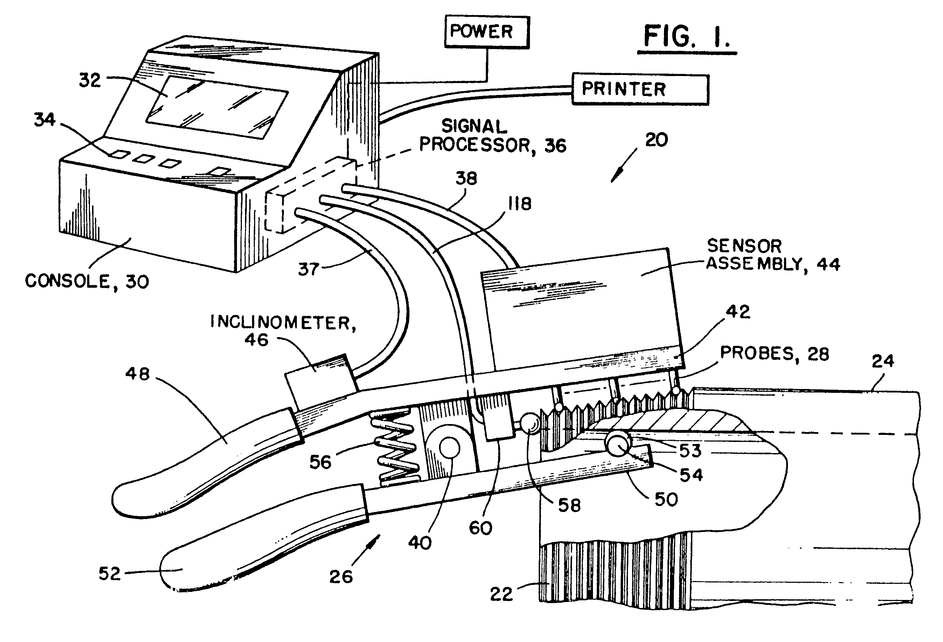

Figure 16 is an abbreviated block diagram of the signal processor shown in Figure 1.

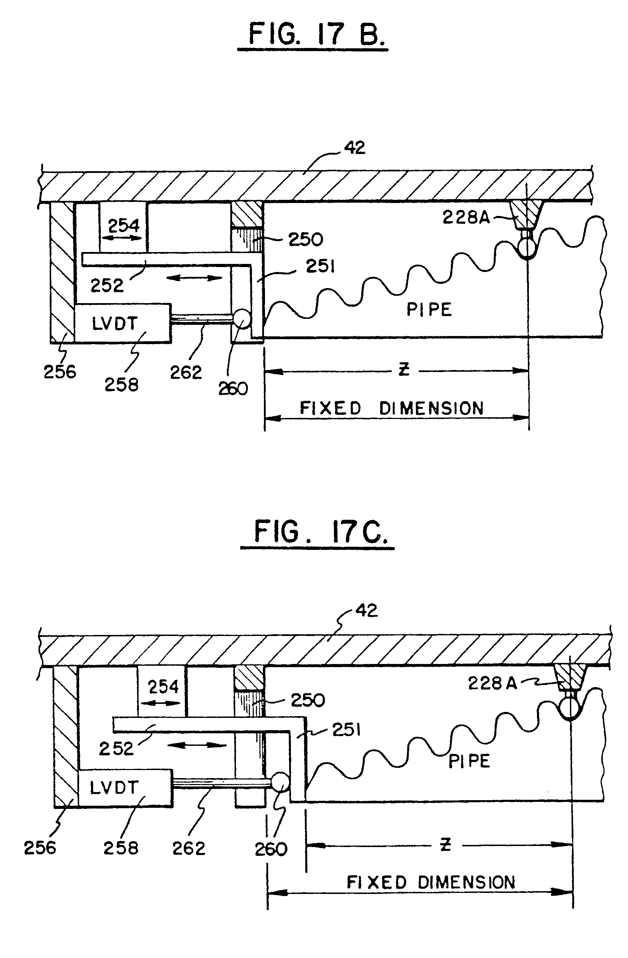

Figure 17a shows the standoff system of the tool when the standoff ball probe falls within the established range of the standoff mechanism.

Figures 17b and c show the standoff system of the tool when the standoff ball probe falls outside the established range of the standoff mechanism.

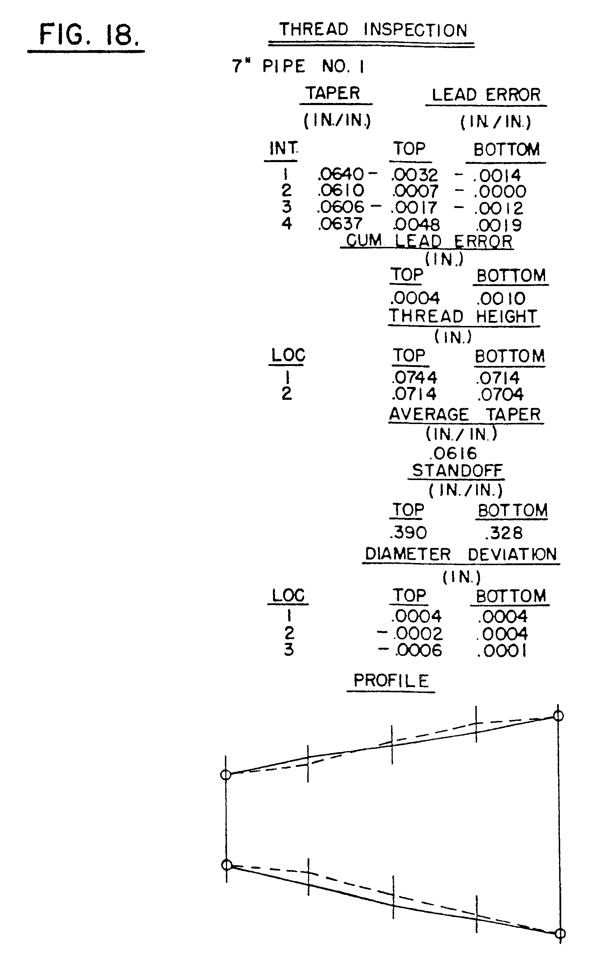

Figure 18 shows a sample printout from the thread measurement system.

Figure 1 shows a stylized view of a thread measurement system 20 for measurement of the characteristics of the thread 22 of a pipe 24. The system 20 includes a measurement tool 26 which incorporates the invention and comprises a set of probes 28 which contact the thread 22 for measuring the thread characteristics. Also included in the system 20 is a console 30 comprising a display 32 which presents information such as the characteristic being measured and the value of the measurement under control of push buttons of a keyboard 34 on the console 30. Also included in the console 30 is a signal processor 36 which is electrically connected via cables 37-38 to the tool 26 for extracting data from the signals detected by the probes 28. The data is coupled from the processor 36 to the display 32 for presentation to an operator of the system 20. A printer can also be coupled with the console to create a hard copy record of the measurements. A sample record produced by such a printer in conformance with the measurements of the various parameters as described hereinafter is shown in Figure 18.

The tool 26 measures the following characteristics of the thread 22; the taper, the lead error, the height error, and the non-linearity of the pitch line. Taper is the increase in the pitch diameter of the thread, in inches per foot, measured within an axial plane of the pipe 24. Lead is the distance from a point on a thread turn to a corresponding point on the next thread turn measured in an axial plane of the pipe 24 parallel to the longitudinal axis of the pipe. Height is the distance between the crest and the root, or trough, measured in an axial plane of the pipe 24 normal or perpendicular to the longitudinal axis of the pipe. These measurements and others may be taken simultaneously and, furthermore, may be taken while the pipe is in situ; that is, in its existing position such as being stacked for storage. As mentioned above, this description of the construction and operation of the tool 26 is being presented principally with respect to the measurement of the external thread of a pipe, it being understood that this description applies in an analogous fashion to the internal thread of a coupling (as shown in Figure 14d).

The tool 26 is formed as a set of two arms which are hinged about a pivot 40 whereby the two arms can grip the thread 22 in the manner of a pair of jaws. The upper arm or jaw is formed as a base 42 which supports a sensor assembly 44 and an inclinometer 46, and terminates in a handle 48. The lower arm or jaw 50 terminates at its back end in a handle 52 opposite the handle 48.

The front end of the jaw 50, as may be seen in a cut away portion of the pipe 24, supports a pair of contacts 53-54 which, in this embodiment, have a rounded form and are spaced apart along a transverse plane of the pipe 24 for contacting the inner surface of the threaded portion of the pipe 24. A spring 56 is disposed between the base 42 and the lower jaw 50 for urging these two together for gripping the thread 22.

Figure 13 shows one manner in which the tool is supported for taking measurements on an externally threaded pipe. Probes 28 are supported by base 42 and are aligned in a plane on one side of the pipe wall, the thread side, while contacts 53 and 54 (or loading balls) are supported by lower arm or jaw 50 of the tool on the other side of the pipe wall, the non-threaded side. Contacts 53 and 54 are located so as to substantially equalize the load on probe 28A and 28G. Located between probes 28A and 28G to eliminate any possibility of the tool rocking while measurements are being taken is eliminated.

4

Figures 14a and b are views of the tool installed on external and internal pipe threads 24 and 24', respectively. It is seen that such an arrangement of contacts 53 and 54 with the probes has advantages when both internal and external threads are to be measured by the same tool. As seen in Figures 14c and d, the distance D and D' are nearly identical due to the motion of locating support and probes 28A and 28G in the plane of measuring probes 28B, C, D, E, and F.

Referring again to Figure 1, the overall size of the tool 26 is sufficiently small so as to be readily carried about by a person measuring the pipe 24. The console 30 can be fabricated as a relatively large, stand-alone console, or, preferably can be fabricated as a miniaturized portable console that may be carried about with the tool 26 in a carrying case (not shown). The system 20 requires only that the person manually attach the tool 26 to the thread 22, and that he signify, via the keyboard 34, the values of relevant parameters and what measurements are to be presented on the display 32. Such automatic operation of the measuring steps enables very accurate readings to be taken each time the tool is used and operator experience does not enter as a factor into such accuracy. In this respect, the tool is a "hands off" system.

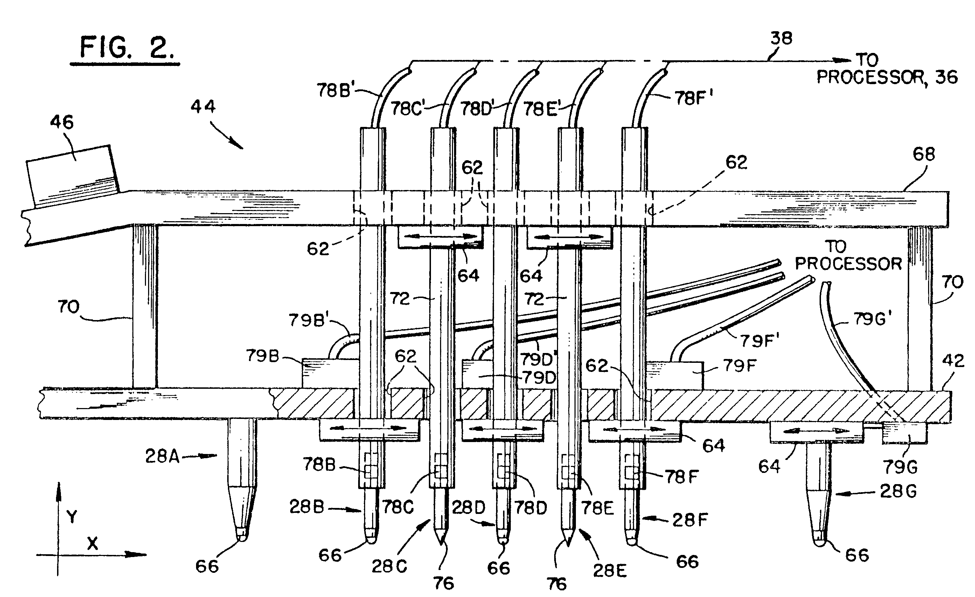

In accordance with the invention, the set of probes 28 extend downwardly from the sensor assembly 44 within an axial plane of the pipe 24 to contact the thread 22. The end ones of the probes (28A and 28G) serve as legs for support of the base 42 and the assembly 44 upon the thread 22 to counteract the force of the spring 56. A horizontal bumper probe 58 extends from a transducer 60 supported beneath the base 42 and abuts the end of the pipe 24 for designating the position of the tool 26 relative to the end of the pipe. Probe 58, which can be similar to probes 28B, D and F, provides standoff for the tool when being located on the pipe by the operator. The standoff probe determines how far from the end of the pipe the first probe; for example, probe 28A in Figure 2, is located.

A description of how the stand off system operates as the operator places the tool onto a pipe is now described. The operator grasps handles 48 and 52 (Figure 1) and squeezes them together so as to open jaws 42 and 50. The operator then places the open jaws onto the area of the pipe carrying the thread to be measured. The jaw portion of the tool is placed around the pipe wall, the base 42 of the first jaw adjacent the threaded or outside portion of the pipe and the contacts 53-54 of the jaw adjacent the inside wall of the pipe in this embodiment. The jaw portion is slipped over the end of the pipe wall by the operator until stand off pin 250 contacts the end of the pipe.

Stand off pin 250, which can be a pair of pins as shown in partial cutaway fashion in Figures 17a-c, is fixedly mounted to base 42. The stand off transducer 60 and bumper probes 58 shown in a general fashion in Figure 1 can be of any suitable type such as that depicted in Figures 17a-c. For instance, transducer 258 can be an LVDT type similar to transducer 78 shown in Figure 2 which has a core attached to probe tip 260, or ball 260, by rod 262. The transducer 258 is rigidly mounted onto bracket 256 which in turn is rigidly mounted onto base 42. It is noted that the mechanism and pipe are not necessarily drawn to scale in Figures 17a-c.

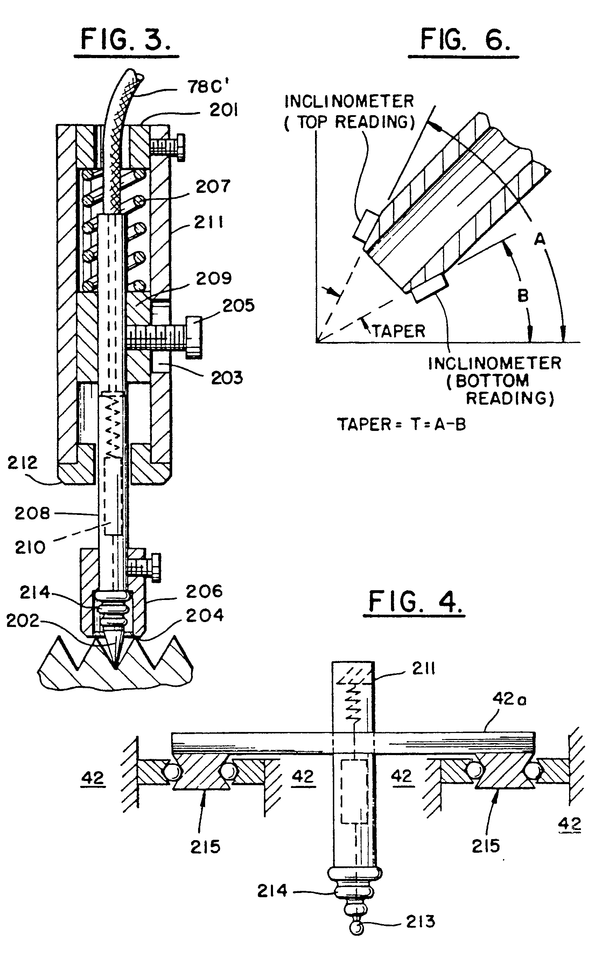

In addition to LVDT 258, the stand off mechanism shown in Figures 17a-c also includes a stand off member 252 which is slideable relative to stand off pin 250 as depicted by the arrows. Stand off member 252 has a pipe contact portion 251 which can be biased by LVDT probe ball 260 generally located on the right side of standoff pin 250 (Figures 17a and 17b) as the tool is being placed on the pipe. Stand off member 252 is adapted to be translatable through slide 254 which is rigidly mounted on base 42. Slide 254 can be any suitable type such as the slide 215 depicted in Figure 4.

As stand off pin 250 approaches the end of the pipe, portion 251 of stand off member 252 is located in a position just ahead, or to the right in Figures 17a-c, of stand off pin 250, being maintained in this position by probe ball 260. Thus, stand off member 252 first contacts the end of the pipe as the operator installs the tool. Then, as the operator places the tool farther onto the pipe, stand off pin 250 will come into contact with the end of the pipe thereby preventing any further movement of the tool in such direction. During this time, portion 251 of stand off member 250 is pushed to the left relative to the stand off pin and base by the pipe end enabling portion 251 of member 252 to reach the position shown in Figure 17b.

After the stand off pin contacts the end of the pipe, the operator releases his grip on handles 48 and 52 allowing the jaws to come together and seat themselves on the pipe. As this occurs, the tool's fixed probe, such as probe 28a, seats itself into an adjacent trough of the thread. If the position of the ball probe 260 falls outside of an established range when probe 28a seats itself in the trough of the thread, then the operator receives a signal to reposition the tool. In this case, transducer input data is void and the program stops until the tool is properly repositioned within the measuring range.

Figure 17a represents the position of the standoff mechanism when the tool is positioned properly. Figures 17b and 17c represent out of range conditions. The "Z" dimension shown in Figure 17a is the distance from the nose of the pipe to the fixed probe 28a resting or seated in a good thread trough. In the case where out of range conditions exist (17b & 17c), when the operator repositions the tool, the fixed probe

5

28a moves accordingly.

As an example of the three conditions shown in Figures 17a-c, it is assumed that the "fixed dimension" is 0.500 inches. In Figure 17a, Z is equal to or greater than 0.320 inches and equal to or less than 0.500 inches. In Figure 17b, the standoff mechanism is out of range since Z is greater than 0.500 inches. In Figure 17c, the standoff mechanism is also out of range since Z is less than 0.320 inches. All dimensions recited above are approximate; 1 inch = 25.4 mm.

Upon receiving the signal to reposition the tool, the operator must move the tool either left or right relative to the pipe (Figures 17a-c). Assuming the condition shown in Figure 17b exists, the operator must move the tool to the left relative to the pipe. As the operator repositions the tool, the fixed probe will move to the left towards the end of the pipe to seat itself, such as in the next trough. In so doing, the tool, base 42 and stand off pin 250 move to the left from the position shown in Figure 17b to the position shown in Figure 17a.

As stand off pin 250 moves to the left, the LVDT which biases ball tip 260 to the right keeps stand off member 252, particularly portion 251, in contact with the end of the pipe. There is sufficient stroke in the LVDT to accommodate probe 28a moving one full thread spacing. The position that ball tip 260 reaches as the tool is shifted to the left to seat the fixed probe in the trough is measured by the core of the LVDT 258. This determines how far from the end of the pipe the fixed probe, such as probe 28a, is located.

As the fixed probe seats itself in the trough, the other probes also seat themselves in adjacent troughs and contacts 53-54 (Figure 1) come into contact with the other side of the pipe wall. At this time, the tool is fully installed on the pipe in a proper manner and the operator activates the electronic control unit to take the thread measurements which may be printed out of a printer in the hard copy form, e.g., paper, shown in Figure 18.

Figure 2 shows an enlarged view of one embodiment of the sensor assembly 44 previously described with reference to Figure 1. In this embodiment, there are seven probes which are further identified by the legends A-G. The probe 28A is the end probe fixed in position on base 42 and the probe 28G is an axially movable end probe (moves generally in the direction of the pipe axis), these two probes serving as supporting legs as was noted with respect to Figure 1. Probes 28A and 28G contact the threads and, although shown as end probes in Figure 2, can be located in any convenient position relative to each other and relative to the other probes on the tool as long as they can provide their intended support function. The probe 28G is secured to the base 42 by means of a slide 64 which permits axial displacement in a general direction noted by the arrow. The displacement is generally in the axial plane of the pipe 24 and slides suitable for use as the slide 64 are available commercially. The probes 28A and 28G are provided with ball points 66 to facilitate location of the probes 28A and 28G within the troughs of the thread 22.

The slide 64 permits the probe 28G to be displaced sideways permitting alignment of the probes 28A and 28G with the precise spacing actually existing between troughs of the thread 22. Thereby, the probes 28A and 28G can serve as legs for securely supporting the base 42 and the assembly 44 upon the thread 22.

The assembly 44 further comprises an upper deck 68 supported by posts 70 upon the base 42. The probes 28B-F pass through enlarged apertures 62 in both the base 42 and the deck 68. The probes 28B-F are supported by slides 64 disposed in alternating fashion upon the base 42 and the deck 68, this alternating arrangement providing space for implacement of the slides 64 among the probes 28B-F. Each of the slides 64 permits sideways movement of their respective probes 28 while holding the housings 72 of the respective probes 28 against vertical motion relative to the base 42. Each of the probes 28B-F include an extensible rod which can move vertically within the respective housing 72 for engagement of the probes with the thread 22. The tips of all the probes shown in the embodiment of Figure 2, with the exception of probe 28A, can move in the X direction. The tips of all the probes of Figure 2, with the exception of probes 28A and 28G, can also move in the Y direction. The amount of tip movement in the X direction is measured for probes 28B, 28D, 28F and 28G. The amount of tip movement in the Y direction is measured for probes 28B-F.

The probes 28B, 28D and 28F are each provided with the ball points 66 so as to be centered within the troughs of the thread 22 at the pitch line. The probes 28C and 28E are provided with retractable points 76 (to be described further hereinafter) for contacting the root, or base, of the respective troughs upon making contact with the thread 22. The slides 64 permit the points 76 to be displaced sideways or parallel to the axis of the pipe so as to find the roots of the thread 22.

The assembly 44 further comprises a set of transducers 79, individual ones of which are connected to respective ones of the probes 28B, 28D, 28F and 28G for detecting the amount of sideways displacement and, therefore, providing data as to the precise location of each of these probes. The transducers 78 and 79 can be of any suitable type, such as an LVDT or Linear Variable Differential Transformer which is a

6

standard device used in measurement applications. The AG Series transducer sold by Sangamo Transducers of Grand Island, N.Y. is one type suitable for this application. They provide electric signals via lines 78a and 79a to the processor 36, these signals being linearly related to the displacement of the respective probes 28 generally in or perpendicular to the axial plane of the pipe 24. The transducers 78 and 79 are shown schematically in Figure 2. Transducers 79 may be mounted in staggered fashion upon the base 42 and the deck 68 so as to provide space for all the transducers among the probes 28 and the slides 64.

All of the probes 28 are disposed along a common axial plane which preferably bisects the distance between the two contacts 53-54 (Figures 1, 13, and 14) to provide for a stable mounting of the assembly 44 upon the thread 22, the contacts 53-54 preventing a lateral rocking while the legs (probes 28A and 28G) preventing a longitudinal rocking. Each of the probes 28B-F contain electric leads which fan into the cable 38 for connection of the signals of these probes to the signal processor 36.

With reference now to Figures 3, 4, and 5, there is provided a more detailed description of the configuration of the linear displacement transducers employed in the transducers 78 and 79 as well as in the probes 28B-F. The construction of probes 28C and 28E, which measure thread height is shown in detail in Figure 3. The probe assembly has a floating tip 202 which seats into the root trough of the thread assembly. As the tool is placed on the pipe thread, reference surface 204 rests or seats itself on the top or crest of the thread. Surface 204 is on floating thread crest standoff collar 206.

Collar 206 is mounted on LVDT case 208, such as by the screw shown, which contains LVDT core 210 which generates a signal indicative of the thread height error. Tip 202 is connected to the LVDT core 210 so that after collar 206 is positioned on the thread top, the tip seats itself in the thread trough. The tip's position locates the LVDT core relative to its case and generates the thread height error signal, a zero signal indicating that the thread height has no error therein.

The LVDT case 208 is slideably mounted on an LVDT guide 212, such as by a slip fit, so that as the tool is placed on the pipe, collar 206 adjusts itself relative to guide 212 to come to rest on top of the threads. Guide 212, which is mounted on the frame of the tool, such as to base 42 or upper deck 68, has a hollow housing 211. The guide does not move in the vertical direction relative to the base 42. The LVDT case 208 is securely mounted to bearing 209 which is able to ride up and down inside the hollow of the guide. Guide 212 also contains a spring 207 which biases the LVDT case 208 downward towards the pipe, the upper and lower limits of the case's movement, or its stroke, being limited by dog 205 in slot 203 of the guide. Spring 207 is held in the guide by adjustable spring bushing 201.

Figure 4 is an illustration of the probe configuration that is used for probes 28 B, D, & F which are ball probes as opposed to pointed probes. Here, the LVDT case 211 is securely mounted against movement in the vertical direction to the frame of the tool, such as on base 42 or deck 68. The probe ball is attached to the LVDT core 210 (see fig.3) so that the position of LVDT core 210 relative to LVDT case 211 is determined by the position at which the ball comes to rest on the pipe. This position generates a signal, as in Figure 3, which indicates the pitch line error, a zero signal meaning that the pitch line has no error. The connecting member above the ball has a protective cover 214.

Figure 4 also illustrates the manner in which the probe is mounted for sideways movement, if needed, to locate ball 213 into the trough of the thread. Ball slide or positioning assemblies 215 are fixedly mounted on the frame of the tool, such as on deck 42 or deck 68, so that such motion can be accomplished.

Any suitable ball slide or positioning slide assemblies can be used for this purpose such as those supplied by Del-Tron Precision, Inc., of Brookfield, CT. In the configuration shown in Figure 4, the slide assemblies 215 are mounted onto the frame of the tool to provide sideways (horizontal) motion to the probes while LVDT case 211 is fixed to a member 42a which is mounted on the slide assemblies 215. In this manner, the LVDT case 211 is restrained from vertical movement relative to the frame of the tool, but can adjust itself horizontally or generally sideways of the frame to enable the probe tip or ball to seat itself in the trough of the thread. A similar arrangement for sideways movement can be used for probes 28B-G.

Ball probe 28A is fixed to the frame of the tool, such as to base 42 as shown in Figure 2, and its ball 66 is not permitted to move up or down or sideways relative to the tool since, in addition to being a support leg, it provides a fixed reference position for the tool when it seats itself into the trough of a thread. Ball probe 58, which acts as a bumper probe, as described earlier, is connected to an LVDT unit which is also tied into the signal processor 36.

The standoff pin places probe 28A into the vicinity of a full thread such as the first full thread on the pipe as the tool is placed on the pipe by the operator. The ball of probe 28A will slide down into the actual location of the trough of the first full thread as the operator releases his grip on the handles 48 and 52. Since probe 28A is fixed to the tool without any movement permitted therebetween, as ball 66 of probe 28A is shifted sideways to seat itself in the trough of the first full thread, it also shifts the entire tool with it.

Once probe 28A is properly seated, LVDT 60 is relied upon to provide an accurate reading of standoff;

EP 0 156 140 B1

that is, the distance between the end of the pipe and first full thread. Also, as the operator releases his grip on handles 48 and 52, the other probes 28B-G seat themselves in the troughs of threads, each being able to move sideways as needed to seat properly in the adjacent thread trough by virtue of its slide positioning assembly.

Referring again to Figures 1 and 2, it is seen that the tool also has an inclinometer located on base 42. This is used to determine average thread taper. Any suitable type of inclinometer may be used for this purpose; for instance, an inclinometer from Transducers and Systems, Inc. of Branford, CT which is capable of operating in upright and inverted positions.

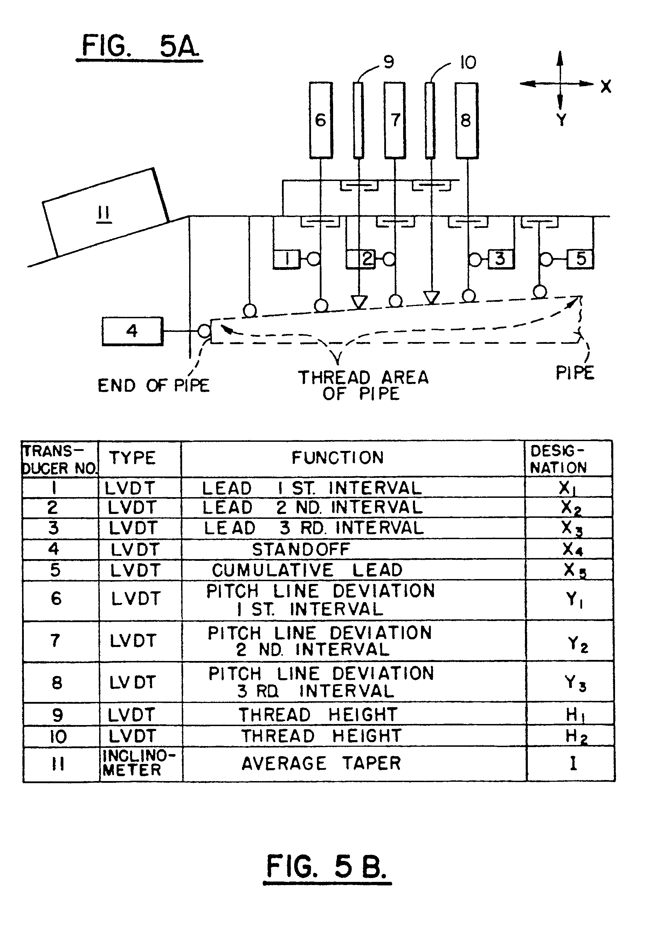

Figures 5a & 5b are intended to be used together for the purposes of the following description. Figure 5a is a very simplistic illustration of the tool shown in Figure 2, but emphasizing the probes, LVDTs and inclinometer. It is to be understood that the transducers 1, 2, 3, 5, 6, 7, 8, 9 & 10 of Figures 5a & b are equivalent to the transducers (LVDTs) 79B, 79D, 79F, 79G, 78B, 78D, 78F, 78C and 78E, respectively, in Figure 2. Transducer 4 in Figures 5a & b is equivalent to LVDT 60 in Figure 1. Inclinometer 11 in Figures 5a & b is equivalent to inclinometer 46 of Figures 1 & 2.

The relationship between the transducers and probes in the tool and the various aspects of the thread being measured are clearly associated in Figure 5b. It is seen that all of the transducers are of the LVDT type in this embodiment. It is also noted that transducers 1-3 measure the lead error, $X_1$, $X_2$ and $X_3$; transducer 4 measures the standoff position, $X_4$; transducer 5 measures the cumulative lead error, $X_5$; transducers 6-8 measure the pitch line deviation or non-linearity of the pitch line, over four intervals of the thread, $Y_1$, $Y_2$ and $Y_3$; and transducers 9 and 10 measure the thread height error, $H_1$ and $H_2$. Average taper, I, is measured by inclinometer 11.

Comparing Figures 3 and 4 to Figure 2, it is noted that the structure of Figure 3 is used with probes 28C and 28E while the structure of Figure 4 is used with probes 28B, 28D and 28F. Thus, the reference surface 204 of the collar 206 of the thread height measuring assembly in Figure 3 contacts the crests of the thread 22 while the point 76 is urged further into the root of the thread 22. The electrical signals of the transducers 78C and 78E are operatively connected to probes 28C and 28E and indicate the displacement of the point 76 relative to the collar 206 and case 208 and, accordingly, the height error of the thread 22. In the case of the probes 28B, 28D and 28F, the transducers 84 are more directly supported by the slides 64. The location of a trough of the thread 22, as sensed by a ball point 66, relative to the base 42 is indicated by the output signals of each of the transducers 78B, 78D and 78F of the probes 28B, 28D and 28F, respectively. It is noted that with respect to the probes 28B, 28D and 28F, the base 42 serves as a reference plane due to the supporting of the base 42 upon the probes 28A and 28G.

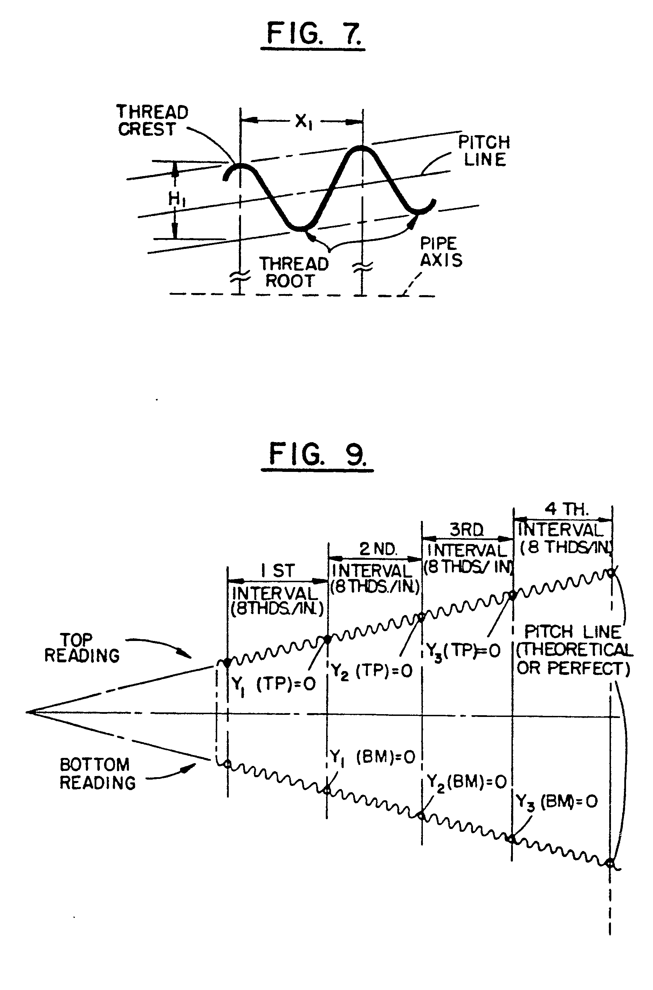

A better appreciation of the thread measuring technique provided by the tool in accordance with the invention can be had by reference to Figures 7 to 11 in conjunction with the following description. All types of threads can be measured with the tool; for example, pipe threads, screw threads, helical cams, etc. However, for the purposes of this description, the measurement technique is described in conjunction with 8 round thread as set out in Supplement 1 to API Std 5B (Tenth Edition) "Specification for Threading, Gaging, and Thread Inspection of Casing, Tubing and Line Pipe Threads," issued on March, 1980 by the American Petroleum Institute, Production Department, 211 N. Ervay, Suite 1700, Dallas, TX 75201.

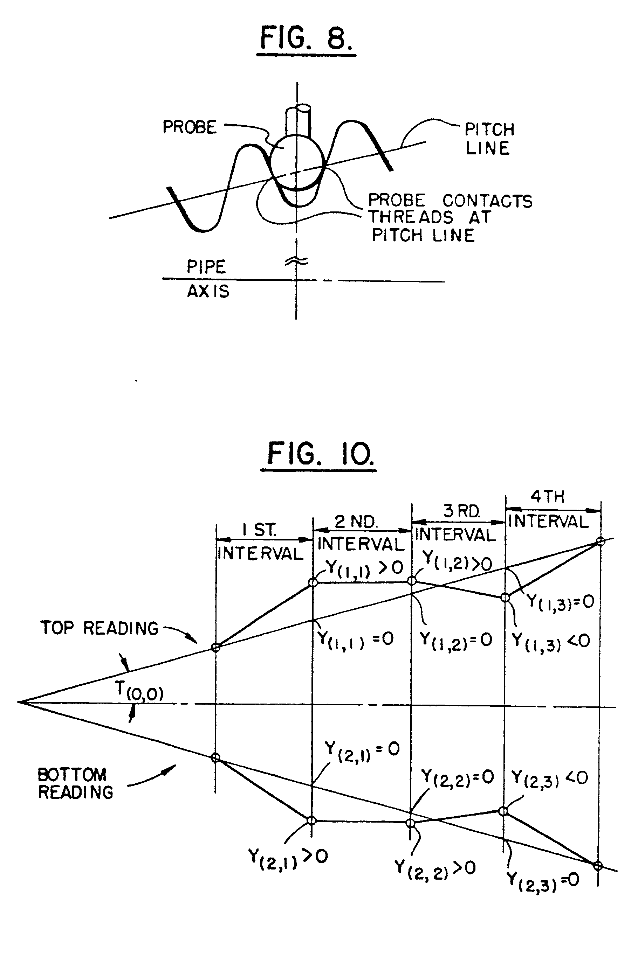

Table 2.9, page 11, of this specification contains a graphical depiction of 8 Round thread profile. Figure 7 depicts the same thread in an abbreviated graphical form for clarity in conjunction with this disclosure. Thread taper is defined as the increase in pitch diameter of the thread in inches per foot of thread. Thread lead is defined as the distance from a point on the thread turn to a corresponding point on the next thread turn measured parallel to the thread axis and shown as "$X_1$" in Figure 7. Thread height is the distance between the crest and root normal to the axis of the pipe and depicted as "$H_1$" in Figure 7. Figure 8, which is similar to Figure 7, shows how the ball probes used in the tool interact with the threads when placed in the troughs of the threads for taking a measurement. The size of the ball is matched to the type of thread being measured and the probe contacts the thread flank on the pitch line as shown.

The measurement of pitch line deviation is possible by the tool in addition to taper, lead error and height error measurements. Pitch line deviation or non-linearity of pitch line, is defined as the deviation of the pitch line from a straight line drawn between the ends of the interval of threads measured by the tool. From top and bottom pitch line or diameter deviation readings taken by the probes on the tool, a profile of the pitch line can be developed. No other method of accomplishing a true profile of the pipe pitch line is known other than rotating the pipe on a contour profilometer which is impractical in most cases. As shown in Figure 9, a hypothetical 8 Round pipe having external threads is being measured by the tool. In this case, the tool is shown as having four segments or intervals over which the pitch line deviation is being measured, the intervals being designated 1st through 4th. Each interval is 25.4 mm (one inch) in length and since, in this embodiment, 8 round thread is being measured, there are eight full threads in each interval.

8

Figure 9 depicts a theoretical condition for the pitch line; that is, there is absolutely no pitch line deviation and the pitch line is linear. Figure 10, on the other hand, depicts the same three intervals being measured in a pipe thread wherein there is pitch line deviation. The "theoretical" or perfect pitch line is also shown in Figure 10 for reference purposes. In both Figures 9 and 10, the two readings carried out by the tool are on the top and bottom of the pipe and are so marked "top reading" and "bottom reading". The tool readings obtained from the four intervals determine the non-linearity of the pitch line and can create a profile of the actual pitch line which Figure 10 essentially represents.

One tool reading may be taken for lead error, thread height error, and pitch line deviation at any circumferential location on the pipe measured. When pipe thread taper is to be also measured, there must be two readings taken. The second reading is angularly displaced from the first. For instance, the first and second readings can be generally opposite one another. Figure 6 depicts the approach of measuring average taper, the pipe being measured in this embodiment having an external thread. The pipe length does not have to be in a horizontal position for accurate measurements to be taken. The tool can be placed on the pipe in any convenient position to take measurements. The tool, for example, may be installed on the pipe in the vicinity of the top dead center and bottom dead center positions, (the 12 & 6 o'clock positions, respectively) of the pipe end if measurement of average taper is desired. For instance, the proper positions could be plus or minus 10 degrees, and preferably plus or minus 5 degrees, of top and bottom dead center positions. An instrument for this purpose which can be made part of the tool system is shown schematically in Figure 12. Such an instrument includes sensors which indicate that the instrument is within the proper measuring position on the top and bottom of the pipe. The sensors can be four mercury switches, switches 216 and 217, to control the top reading position of the tool and switch 218 and 219 to control the bottom reading position of the tool. Any suitable type of switch can be used for this purpose; for instance, mercury switches having the part number 3677 supplied by Durakool, Inc.

The angle of the switches relative to the tool, such as the angle from vertical, can be made adjustable as shown in Figure 12 to precisely control the proper measuring positions of the tool on the pipe. Each switch has a movable contact 220 that only completes the circuit through the switch when the movable contact hits fixed contacts 222a or b.. When this happens, the 9 volts coming into the switches passes through the switch wherein contact was made and carries the voltage to a display, such as LEDS 221, to light them up and indicate an improper positioning of the tool. Thus by properly setting the angle of the switches on the tool so that when the tool is outside the desired range of positions for proper measurement, such as when a top reading is desired, the LED will be lighted by either switch 216 or 217 and the operator can be automatically notified that a repositioning of the tool is required.

As can be seen from Figure 12, as the tool is inverted between the top and bottom readings, switches 216 and 217 become inactive and switches 218 and 219 become active. When the tool is switched from bottom to top position readings on the pipe, switches 218 and 219 become inactive and switches 216 and 217 become activated in controlling the LEDs.

The tool, when seated on the pipe thread, is supported in position on the thread side by probes 28A and 28G basically. Since probe 28A is fixed relative to the frame, the reading on the inclinometer depends upon the seating of probe 28G. As shown in Figure 6, the inclinometer is read while the tool is in both the top and bottom positions in order to provide an average taper measurement. In the top position, the inclinometer generates a signal equivalent to its angle relative to the horizontal or parallel to the axis of the pipe shown as "A" in Figure 6. Then, in the bottom position, it generates a second signal again equivalent to its angle relative to the horizontal or parallel to the axis of the pipe and shown as "B" in the same Figure. These signals are sent to the processor 36 where by are subtracted from one another to thereby produce the average taper of the pipe thread. The computation leading to the average taper $T_{(0,0)}$ of the pipe thread is shown in the first column of Figure 11.

The interval taper is also calculated according to Figure 11. For example, the actual taper over the 1st interval is designated as $T(1,1) + T(2,1)$. It is calculated by the signal processor by taking the reading of transducer 6 and dividing by unity minus the reading from transducer 1 and this quotient is then added to the average taper $T_{(0,0)}$. As mentioned above, a zero reading on the transducers, in this case transducers 6 and 1, is indicative that there is not any error in these readings and, thus, the 1st interval taper would equal the average taper. It is understood that the number of intervals may vary in accordance with specific measurement requirements.

Either or both of the transducers could indicate a positive value error or a negative value error. For instance, referring to Figure 10, transducer 6 would indicate a positive value greater than zero since the actual taper for this 1st interval is greater than theoretical or zero value. Conversely, in the 3rd interval, transducers 8 would indicate a negative value less than zero since the actual taper for the 3rd interval is less than theoretical or zero value. This is indicated by "$Y_{(1,3)} < 0$" and $= "Y_{(2,3)} 0$" at the actual values. For reference purposes only, Figure 11 also shows the theoretical values for each interval.

The chart in Figure 11 also shows the calculations for cumulative lead, lead in each of the intervals, pitch line non-linearity and thread height. It is seen that the reading of transducer 5 gives a cumulative lead value; the readings of transducers 1, 2, & 3 develop the leads for the 1st, 2nd, 3rd and 4th intervals, respectively; the readings of 6, 7, and 8 develop the pitch line non-linearity; and the readings of transducers 9 and 10 develop the thread height, all in conformance with the computations shown.

In order to conform with API specifications, all measuring intervals must be located on 25.4 mm (one inch) centers. Thread depth transducers should be located on the center line of each interval but also have one inch intervals. It has been found that by using the measuring concept as disclosed herein, the complete range of pipe sizes, (for instance, all sizes of 8 round casing with the exception of a few odd sizes) can be readily measured by the use of three such tools. Figure 15 shows the three styles of tools that can accomplish such a wide range of pipe sizes.

With reference now to Figure 16, there is shown a general description of the signal processor 36. The processor 36 includes a computer 108, a signal conditioning unit 110 a multiplexor 114, and an analog-to-digital converter 116.

Any suitable control system and signal processor can be used in conjunction with the tool. For instance, the system can include a general purpose microprocessor in the electronic module, which together with suitable software such as that in the Appendix herein, will carry out all necessary calculations and control functions. The entire system including the electronic module, tool, display and printer can be made portable and battery operated, if desired.

The conditioning unit 110 receives electric signals from the tool 26 via cables. Figure 16 shows cables 37, 38, 118, for example, however, it is understood that other cables for the described signals as well as additional lines for other functions may be added. These signals, after conditioning, are multiplexed by the multiplexer 114 before transmission to the computer 108. The converter 116 converts the signals of the multiplexer 114 from the analog format, as produced by the tool 26, to a digital format for further processing by the computer 108.

The computer 108 can be a special purpose computer specifically designed for combining the signals of the various probes 28, the transducers 78 and the transducer 60 for outputting the desired data on the display 32. However, as hereinbefore mentioned, the calculations performed by the computer 108 can also be accomplished by a general purpose computer, or microprocessor, as will be described hereinafter by means of a flow chart suitable for such microprocessor.

The thread characteristics of lead error, height error, and deviation of diameter are provided by combining signals of the probes 28. The position of the base 42 relative to the end of the pipe 24 is communicated from the transducer 60 via a cable 118 to the processor 36. The construction and operation of the transducer 60 is the same as that described above with respect to the transducers 79. The inclinometer 46 is used for the measurement of the thread characteristic of taper.

The computer 108 has the standard components including timing and control units, address generator, memory, electronic switches shift registers subtractors, and averaging units. In operation, the signal processor 36 receives input signals along the cables 37, 38 and 118, and outputs power for energizing the input windings of the various transducers and any reference input terminals for detection of the magnitude and sense of the voltage from the outputs of one of the transducers. Conditioning unit 110 can include band pass filters for removing any noise which may be present on a transducer signal.

The multiplexer 114 is operated under control of the timing unit for electronically sampling successive ones of the transducer signals and for outputting these signals serially to the converter 116. Each of these signals has a magnitude and a sense, and each sample is then converted by the converter 116 to a digital format containing the amplitude and sense data. The digital signals of the converter are output to the memory 124 of the computer 108.

The memory and other components in the computer operate under control of the computer unit 120, as required, for receiving digital signals and for outputting digital signals. To measure the pitch line deviation and develop pitch line non-linearity, of the threaded portion of the pipe 24, the signals of the probes 28B, 28D and 28F are taken into the signal processor for computation which is then shown on the unit's display 32. To provide the thread height, signals from the probes 28C and 28E are likewise taken into the signal processor for computation, the results of which are also displayed in display unit 32. For measurement of the cumulative thread lead, the signals of transducer 79G coupled to the probe 28G are sent to the computer for processing and display. It is noted that probe 28A serves as a reference point. For measurement of the taper, the signal from inclinometer 11 is fed to the signal processor.

A more general form of test routine can be accomplished by use of a general purpose computer by use of the flow sheets and tabulations presented in the Appendix at the end to this specification. The material presented therein is in standard format and, accordingly, readily understood. Accordingly, this material will be reviewed briefly. At the beginning of the flow sheet, a keyboard entry would indicate whether a calibration measurement is to be made or whether the operation is to proceed for actual measurement.

Calibration is employed, such calibration being accomplished by attaching the tool 26 to a calibrated gage and, thereafter, noting the transducer measurements presented on the display 32. These latter results are also stored in the memory of the computer for comparison to the actual measurements. This, in effect, amounts to a zeroing of the tool 26 so that the discrepancy between the standard values and the actual values can be attained.

Proceeding with the flow chart in the Appendix, the system contemplates the use of a printer (not shown) which operates in conventional fashion for outputting information from the computer. The keyboard instructions are then followed as to whether the instructions to the tool 26 are to be printed out or not.

Thereafter, the program continues with the inputting and storage of data. Then a decision block decides whether the last data has been entered or not. In the event that more data is to be entered then the process is repeated for the inputting of further data. If the last parameter has been entered, then the process continues to identify the nature of the thread, if a pipe or if a coupling. Thereafter, identification number may be applied and input parameters printed out.

During the ensuing steps in the flow chart, symbols are presented so as to simplify the amount of legends presented in each box of the flow chart. The symbols are identified in the table following the flow chart in the Appendix. The computer can operate with the tool 26 for reception of the raw data and for calculation of the desired thread characteristics.

It is to be understood that the above described embodiment of the invention is illustrative only, and that modifications thereof may occur to those skilled in the art. Accordingly, this invention is not to be regarded as limited to the embodiment disclosed herein, but is to limited only as defined by the appended claims.

11

EP 0 156 140 B1

# THREAD INSPECTION FLOW CHART

EP 0 156 140 B1

g h     i

$H(J,N)>(HTH-\frac{e}{2})$ OR $H(J,N)<(HTL+\frac{e}{2})$

$H(J,N)>(HTH-\frac{e}{2})$ OR $H(J,N)<(HTL-\frac{e}{2})$

$H(J,N)>(HTH+g)$ OR $H(J,N)<(HTL-g)$

HF(J,N)=0    HF(J,N)=1    HF(J,N)=2    HF(J,N)=3

J=2

$IT(N)>(TTH-\frac{e1}{2})$ OR $IT(N)<(TTL+\frac{e1}{2})$

$IT(N)>(TTH+\frac{e1}{2})$ OR $IT(N)<(TTL-\frac{e1}{2})$

$IT(N)>(TTH+g1)$ OR $IT(N)<(TTL-g1)$

ITF(N)=0    ITF(N)=1    ITF(N)=2    ITF(N)=3

N=N+1    N=A

J=2    J=2

j

15

j

J=1

CL(J) > (CLT - $\frac{g}{2}$)
OR
CL(J) < (-CLT + $\frac{g}{2}$)   Y

CL(J) > (CLT + $\frac{g}{2}$)
OR
CL(J) < (-CLT - $\frac{g}{2}$)   Y

CL(J) > (CLT + g)
OR
CL(J) < (-CLT - g)   Y

N

N

N

CLF(J)=0    CLF(J)=1    CLF(J)=2    CLF(J)=3

J=2   N   J=2   Y

AT > (TTH - $\frac{g1}{2}$)
OR
AT < (TTL + $\frac{g1}{2}$)   Y

AT > (TTH + $\frac{g1}{2}$)
OR
AT < (TTL - $\frac{g1}{2}$)   Y

AT > (TTH + g1)
OR
AT < (TTL - g1)   Y

N

N

N

ATF=0    ATF=1    ATF=2    ATF=3

J=1

N=1

LF(J,N)=1
OR
HF(J,N)=1
OR
ITF(N)=1   Y   RL=1   N   FRL=1

N   Y

k   l   m

# EP 0 156 140 B1

17

**ZERO COEFF**

Enter measured tolerance deviation on zero master gauge.

DISPLAY
ENTER ACCESS NUMBER

INPUT TI

This concept must be expanded for every set of master gauges used.

TI = ZAN — N

Y

DISPLAY
ENTER CHANNEL NUMBER

INPUT N

DISPLAY
ENTER VALUE

INPUT ZD(N)

STORE ZD(N)

DISPLAY
CONTINUE? ENTER Y,N

INPUT TI

TI — Y / N

RETURN

---

**TOOL COEFF**

Enter tool accuracy and gross error coefficients.

DISPLAY
ENTER ACCESS NUMBER

INPUT TI

TI = CAN — N

Y

T = 1 — Y

N

DISPLAY
ENTER (1st PASS) Re
"    (2nd  "  ) Re1
"    (3rd  "  ) Rg
"    (4th  "  ) Rg1

INPUT
(1st PASS) Re
(2nd  "  ) Re1
(3rd  "  ) Rg
(4th  "  ) Rg1

DISPLAY
ENTER (1st PASS) Se
"    (2nd  "  ) Se1
"    (3rd  "  ) Sg
"    (4th  "  ) Sg1

INPUT
(1st PASS) Se
(2nd  "  ) Se1
(3rd  "  ) Sg
(4th  "  ) Sg1

4th PASS — N

Y

RETURN

---

**SPAN**

Enter measured displacement on span master gauge relative to nominal zero.

DISPLAY
ENTER ACCESS NUMBER

INPUT TI

This concept must be expanded for every set of master gauges used.

TI = SAN — N

Y

DISPLAY
ENTER CHANNEL NUMBER

INPUT N

DISPLAY
ENTER VALUE

INPUT SP(N)

STORE SP(N)

DISPLAY
CONTINUE? ENTER Y,N

INPUT TI

TI — Y / N

RETURN

---

CALIBRATE COMMANDS

**CAL 1**

DISPLAY
POSITION TOOL

PAUSE

INPUT M(1)

Z(1)=M(1)

STORE ZERO
OFFSET Z(1)

RETURN

USE INCLINOMETER
ZERO GAUGE

CONTINUE AFTER
ENTER IS PRESSED

18

## FLOW CHART VARIABLE TABLE

| VARIABLE | SIGNIFICANCE | DIMENSION |
|---|---|---|
| A | Number of intervals on tool | - |
| A( , ) | A( ,1) Inclinometer reading | Deg. |
|  | A( ,2-16) LVDT readings | in |
| AT( ) | Average Taper   AT = AT(ID) | in/in |
| ATF | Average Taper Flag | - |
| Be | Buttress tool error factor | in |
| Be l | Buttress tool error factor | in/in |
| Bg | Buttress gross error factor | in |
| Bg l | Buttress gross error factor | in/in |
| C | 0 if pipe 1 if coupling | - |
| CAN | Coefficient Access Number | - |
| CL( ) | Cumulative Lead | in |
| CLF( ) | Cumulative Lead Flag | - |
| CLT | Cumulative Lead Tolerance | in |
| D( , ) | Diameter deviation | in |
| DA | Diameter Actual | in |
| DZ | Diameter when Zeroed | in |
| $\Delta$D | Delta Diameter | in |
| E | The number of channels that the tool uses |  |
| EI | EI dimension from API 5B | in |
| e | Tool error factor | in |
| e l | Tool error factor | in/in |
| FRL | Flashing red light 0-off 1-on |  |
| GL | Green light  0-off  1-on |  |
| g | gross error factor | in |
| g l | gross error factor | in/in |
| H( , ) | (thread) Height | in |
| HF( , ) | (thread) Height Flag | - |
| HTH | (thread) Height Tolerance High | in |
| HTL | (thread) Height Tolerance Low | in |
| ID | Current Identification Number |  |
| IT( ) | Interval Taper | in/in |

| | | |
|---|---|---|
| ITF( ) | Interval Taper Flag | – |
| J | Incremental subscript 1 for top of pipe | |
| | 2 for bottom of pipe | – |
| L( , ) | Lead error | in |
| LF( , ) | Lead error Flag | – |
| LT | Lead Tolerance | in |
| LI | LI dimension from API 5B | in |
| LIC | LI dimension Calculated | in |
| LIF | LI Flag | – |
| M | Half of average taper | in/in |
| M( ) | LVDT Millivolt data | mv |
| N | Incremental subscript meaning channel number | |
| | or interval | – |
| P | Print option flag 0 for manual print, 1 for | |
| | auto print | – |
| Re | 8-Round tool error factor | in |
| Re1 | 8-Round tool error factor | in/in |
| Rg | 8-Round gross error factor | in |
| Rg1 | 8-Round gross error factor | in/in |
| RL | Red light 0-off 1-on | – |
| S( ) | Scale factor | mv/in |
| SAN | SPAN Access Number | – |
| SO | Stand Off | in |
| SOZ | Stand Off when Zeroed | in |
| SP( ) | Span coefficient | Deg. or in |
| T | 0 for 8-round pipe 1 for buttress | – |
| T( , ) | Taper | in/in |
| TI | Temporary Input | – |
| TTH | Taper Tolerance High | in/in |
| TTL | Taper Tolerance Low | in/in |
| Z( , ) | Zero offset | mv |
| ZAN | Zero coefficient Access Number | |
| ZD( ) | Zero gauge Deviation | Deg. or in |

EP 0 156 140 B1

22

## Claims

1. A thread-measuring tool comprising a sensor assembly (44) and means (42, 50, 40, 56, 53, 54) for affixing said sensor assembly (44) contiguous to the thread (22) of a pipe section (24, 24');
characterized in that said assembly (44) includes a pair of supporting legs (28A, 28G) extending therefrom and spaced apart from each other for contacting said thread (22) and supporting said assembly (44) on said thread;
that said assembly (44) includes a set of probes (28B-F) for contacting said thread (22) of the pipe section (24, 24') and which are slideably mounted within said assembly for movement in a direction (Y) normal to the longitudinal axis of the pipe section (24, 24') and for translation in a direction (X) parallel to the axis of said pipe section;

one of the probes measures displacement in the direction (Y) normal to the longitudinal axis of the pipe section and at least one (28B, D, F) of the probes measures displacement in the direction (X) parallel to the axis of said pipe section; and

that combining means (36) are provided for combining the measurements of the probe displacements in a direction normal (Y) and parallel (X) to said longitudinal axis of the pipe section to calculate different parameters of the thread of the pipe section (24, 24').

2. A tool (26) according to claim 1, further characterized by inclinometer means (46) disposed within said assembly (44) and being connected to said combining means (36) for sensing a taper of the thread.

3. A tool according to claim 1 or 2, characterized by a first set of probes (28C, E) having at least one probe for the measurement of the error in the height of the thread (22), at least one of the probes of said first set of probes being slideably mounted within said assembly for movement in a direction normal to the longitudinal axis of the pipe section and for translation in a direction parallel to the axis of said pipe section, the axial translation permitting alignment of individual ones of the probes with corresponding troughs of the thread wherein maximum vertical movements can occur for measurement of the thread height;

a second set of probes (28B, D, F) for sensing the location of troughs of the thread, at least one of the probes of the second set being slideably mounted within said assembly in two directions one of which is normal to the axis of the pipe section and a second of which is parallel to the axis of the pipe section, there being means (78B, D, F; 79B, D, F) coupled to said probes of said second set (28B, D, F) for measuring displacement of individual ones of the probes in each of said two directions (Y, X) for obtaining the coordinates of the respective troughs in normal and axial components; and

the combining means (36) combining the measurements of location in each of said coordinate directions to provide deviation in pitch line of the pipe section and error in the lead length of the thread of the pipe section (24, 24').

4. A tool according to claim 3 wherein said fixing means includes an arm (50) pivotably (40) connecting with an end portion of said sensor assembly (44) distant from said probes and extending beneath said assembly for contacting a second surface of the wall of the pipe section (24, 24') opposite said underlying surface at a location corresponding to a site between said pair of legs (28A, 28G) to inhibit motion of said sensor assembly (44) relative to the thread (22) in an axial plane of the pipe section (24, 24').

5. A tool according to claim 4 wherein said arm (50) terminates in a pair of contact elements (53, 54) disposed on opposite sides of a plane joining said pair of legs (28A, 28G) to inhibit motion of said sensor assembly (44) relative to said thread (22) ink a direction normal to said axial plane.

6. A tool according to claim 3 wherein said probes of said first set (28C, E) comprises a probe having a pointed contact (76) for setting within a low point of a trough and a transducer (78C, E) for measurement of longitudinal motion of the probe, the longitudinal motion corresponding to error in the height of the thread (24, 24').

7. A tool according to claim 3 wherein each of said probes of said second set (28B, D, F) comprises a probe having a ball type contact (66) for setting within a trough of the thread (24, 24') and a transducer (78B, D, F) for measuring longitudinal motion of the probe, the set of longitudinal motions of the second set of probe means corresponding to the deviation in pitch line.

8. A tool according to claim 7 wherein said combining means (36) is coupled to the longitudinal motion transducers (78B, D, F) of the second probe means (28B, D, F) said combining means (76) indicating the difference in measurements to provide the deviation in pitch line.

9. A tool according to claim 7 or 8 wherein each probe of said second set (28B, D, F) further comprises a second transducer (79B, D, F) for measurement of transverse motion of the probe of said second set, the transverse motion of each probe corresponding to a value of error in the lead length.

10. A tool according to claim 9 wherein said combining means (36) is coupled to the transverse motion transducers of the second set (28B, D, F) of probes, said combining means (36) indicating the values of error in the lead length.

11. A tool according to claim 10 wherein probes of said first set (28C, E) and probes of said second set (28B, D, F) are arranged in alternating fashion along a row parallel to the axis of the pipe section (24, 24').

12. A tool according to any of the preceding claims, in portable form for automatic thread inspection and measuring a plurality of parameters on a pipe thread (22) and the like in situ irrespective of whether the thread is internal or external to the pipe, comprising:

(a) means (28C, E) located on the sensor assembly (44) for generating a first signal representative of the thread height error,

(b) means (28B, D, F) located on the sensor assembly (44) generating a second signal representative of the thread lead error,

(c) means (46) located on the sensor assembly (44) generating a third signal relating to average taper of the thread,

(d) the combining means (36) receiving the first, second and third signals and generating a display of the thread height error, thread lead error and average thread taper relating to the thread being measured.

13. A tool according to claim 12, further including means on the sensor assembly (44) for generating a fourth signal representative of cumulative lead error and means associated with the sensor assembly for receiving the fourth signal and generating a display of the cumulative lead error.

14. A tool according to claim 12, further including means (46) on sensor assembly means for generating signals representative of pitch line deviation over a given number of intervals of the thread and means associated with the sensor assembly for receiving the pitch line deviation signals and combining them with the third signal to produce a representation of the non-linearity of thread pitch line.

15. A method of automatically measuring taper of a pipe thread and the like in situ with a tool (26) according to claim 2,
characterized by the steps of:

(a) installing the tool (26) on the thread (22) of the pipe section (24, 24') at a first position.

(b) activating the inclinometer means (46) through a control means for providing a first measurement relating to the average taper of the thread (22) relative to a given reference plane,

(c) storing the first measurement,

(d) reinstalling the tool at an angularly displaced position on the thread (22) from the first position.

(e) reactivating the inclinometer means (46) through the control means for providing a second measurement relating to the average taper of the thread (22) relative to the given reference plane. and

(f) substracting the second measurement from the first measurement to determine the average taper of the thread (22).

16. The method of claim 15 wherein the sensor assembly (44) further includes a set of probes (28B, D, F) which measure pitch line deviation of the thread (22) at a given number of intervals over the thread and further including the steps of activating the sensor assembly (44) through the control means for determining the pitch line deviation by the probes at each interval when the tool (26) is both installed and reinstalled on the thread (22) whereby average taper and pitch line deviation are measured to provide a determination of non-linearity of the pitch line.

17. The method of claim 15 wherein the step of reinstalling the tool (26) locates the tool on the pipe approximately opposite the location of the tool when it is first installed on the pipe section (24, 24').

18. The method of claim 17 wherein the tool (26) is installed at approximately the twelve o'clock position on the pipe section (24, 24') and is reinstalled at approximately the 6 o'clock position on the pipe section.

19. The method of claim 17 wherein the tool (26) is installed within approximately plus or minus 5 degrees

EP 0 156 140 B1

of the top dead center of the pipe section (24, 24') and reinstalled at approximately plus or minus 5 degrees of the bottom dead center of the pipe section.

20. A method of automatically measuring height error, lead error, cumulative lead, average taper, interval taper and pitch line deviation of a pipe thread and the like in situ with the same tool (26) according to claim 2,
characterized by the steps of:
(a) installing the tool (26) on the thread (22) of the pipe section (24, 24') at a first position,
(b) activating the sensor assembly (44) through a control means,
(c) measuring height error of the thread (22) with at least one probe (28C, E) in the set of probes,
(d) measuring lead error of the thread with at least one other probe (28B, D, F) in the set of probes,
(e) activating the inclinometer means (46) through control means and measuring and storing a first value relating to average taper of the thread (22) relative to a given reference plane,
(f) measuring pitch line deviation of the thread (22) at a given number of intervals over the thread,
(g) reinstalling the tool (26) at an angularly displaced position on the thread (22) from the first position,
(h) reactivating the inclinometer means (46) through the control means for measuring a second value relating to average taper of the thread (22) to the given reference plane,
(i) subtracting the second value from the first value to determine the average taper of the thread (22), and
(j) reactivating the sensor assembly (44) through the control means to measure pitch line deviation of the thread (22) at the given number of intervals while the tool (26) is reinstalled on the thread (22).

21. The method of claim 20 wherein the measurements are determined simultaneously for each installation of the tool (26) on the thread (22).

22. The method of claim 20 wherein thread height error, thread lead error and cumulative lead error are all determined again when the tool (26) is reinstalled on the thread.

23. The method of claim 22 wherein the tool (26) includes a printer and a graphic illustration of actual non-linearity of the thread (22) is printed thereby in hard copy form.

24. The method of claim 20 including the step of measuring the amount of standoff between the first probe (28A) on the tool (26) and the end of the pipe section (24, 24').

**Revendications**

1. Outil de mesure de filetage comprenant un ensemble capteur (44) et des moyens (42, 50, 40, 56, 53, 54) destinés à fixer le dit ensemble capteur (44) de manière contiguë au filetage (22) d'une section de tuyau (24, 24');
caractérisé en ce que le dit ensemble (44) comprend une paire de pattes de support (28A, 28G) s'étendant depuis celui-ci et espacées l'une de l'autre afin d'entrer en contact avec le dit filetage (22) et de supporter le dit ensemble (44) sur le dit filetage;
en ce que le dit ensemble (44) comprend un ensemble de palpeurs (28B à F) destinés à entrer en contact avec le dit filetage (22) de la section de tuyau (24, 24') et qui sont montés de façon coulissante à l'intérieur du dit ensemble afin de se déplacer dans une direction (Y) perpendiculaire à l'axe longitudinal de la section de tuyau (24, 24') et afin de se translater dans une direction (X) parallèle à l'axe de la dite section de tuyau;
un des palpeurs mesure le déplacement dans la direction (Y) perpendiculaire à l'axe longitudinal de la section de tuyau et au moins l'un des palpeurs (28B, 28D, 28F) mesure le déplacement dans la direction (X) parallèle à l'axe de la dite section de tuyau; et
en ce que des moyens de combinaison (36) sont prévus pour combiner les mesures des déplacements de palpeur dans une direction perpendiculaire (Y) et parallèle (X) au dit axe longitudinal de la section de tuyau afin de calculer différents paramètres du filetage de la section de tuyau (24, 24').

2. Outil (26) selon la revendication 1, caractérisé en outre par des moyens formant inclinomètre (46) disposés à l'intérieur du dit ensemble (44) et reliés aux dits moyens de combinaison (36) afin de détecter une conicité du filetage.

26

**3.** Outil selon la revendication 1 ou 2, caractérisé par un premier jeu de palpeurs (28C, E) ayant au moins un palpeur pour la mesure de l'erreur dans la hauteur du filetage (22), au moins un des dits palpeurs du dit premier jeu de palpeurs étant monté de façon coulissante à l'intérieur du dit ensemble afin de se déplacer dans une direction perpendiculaire à l'axe longitudinal de la section de tuyau et afin de se translater dans une direction parallèle à l'axe de la dite section de tuyau, la translation axiale permettant l'alignement des palpeurs individuels avec les creux correspondants du filetage, les déplacements verticaux maximum pouvant se produire afin de mesurer la hauteur du filetage;

un deuxième jeu de palpeurs (28B, D, F) destinés à détecter l'emplacement des creux du filetage, au moins l'un des palpeurs du deuxième jeu étant monté de façon coulissante à l'intérieur du dit ensemble dans deux directions dont l'une est perpendiculaire à l'axe de la section de tuyau et dont la deuxième est parallèle à l'axe de la section de tuyau, des moyens (78B, D, F; 79B, D, F) étant couplés aux dits palpeurs du dit deuxième jeu (28B, D, F) afin de mesurer le déplacement des palpeurs individuels dans chacune des deux directions (Y, X) afin d'obtenir les coordonnées des creux respectifs sous forme de composantes perpendiculaire et axiale; et

les moyens de combinaison (36) combinant les mesures des emplacements dans chacune des dites directions de coordonnées afin de fournir une déviation du diamètre sur flancs de la section de tuyau et une erreur dans le pas du filetage de la section de tuyau (24, 24').

**4.** Outil selon la revendication 3, dans lequel les dits moyens de fixation comprennent un bras (50) relié de façon pivotante (40) à une partie d'extrémité du dit ensemble capteur (44) distante des dits palpeurs et s'étendant en dessous du dit ensemble afin d'entrer en contact avec une deuxième surface de la paroi de la section de tuyau (24, 24') opposée à la dite surface sous-jacente en un emplacement correspondant à une position entre la dite paire de pattes (28A, 28G) de façon à empêcher le déplacement du dit ensemble capteur (44) par rapport au filetage (22) dans un plan axial de la section de tuyau (24, 24').

**5.** Outil selon la revendication 4, dans lequel le dit bras (50) se termine en une paire d'éléments de contact (53, 54) disposés sur des côtés opposés d'un plan reliant la dite paire de pattes (28A, 28G) afin d'empêcher le déplacement du dit ensemble capteur (44) par rapport au dit filetage (22) dans une direction perpendiculaire au dit plan axial.

**6.** Outil selon la revendication 3, dans lequel les dits palpeurs du dit premier jeu (28C, E) comprennent un palpeur ayant un contact à pointe (76) afin de se loger dans un point bas d'un creux et un transducteur (78C, E) destiné à mesurer un déplacement longitudinal du palpeur, le déplacement longitudinal correspondant à l'erreur dans la hauteur du filetage (24, 24').

**7.** Outil selon la revendication 3, dans lequel chacun des dits palpeurs du dit deuxième jeu (28B, D, F) comprend un palpeur ayant un contact du type à boule (66) afin de se loger à l'intérieur d'un creux du filetage (24, 24') et un transducteur (78B, D, F) destiné à mesurer un déplacement longitudinal du palpeur, l'ensemble des déplacements longitudinaux correspondant à la déviation dans le diamètre sur flancs.

**8.** Outil selon la revendication 7, dans lequel les dits moyens de combinaison (36) sont couplés aux transducteurs de déplacement longitudinal (78B, D, F) des deuxièmes moyens de palpeurs (28B, D, F), les dits moyens de combinaison (76) indiquant la différence dans les mesures afin de définir la déviation dans le diamètre sur flancs.

**9.** Outil selon la revendication 7 ou 8, dans lequel chaque palpeur du dit deuxième jeu (28B, D, F) comporte en outre un deuxième transducteur (79B, D, F) afin de mesurer un déplacement transversal du palpeur du dit deuxième jeu, le déplacement transversal de chaque palpeur correspondant à une valeur de l'erreur du pas.

**10.** Outil selon la revendication 9, dans lequel les dits moyens de combinaison (36) sont couplés aux transducteurs de déplacement transversal du deuxième jeu (28B, D, F) de palpeurs, les dits moyens de combinaison (36) indiquant les valeurs de l'erreur du pas.

**11.** Outil selon la revendication 10, dans lequel les palpeurs du dit premier jeu (28C, E) et les palpeurs du dit deuxième jeu (28B, D, F) sont disposés de manière alternée le long d'une rangée parallèle à l'axe de la section de tuyau (24, 24').

12. Outil selon l'une quelconque des revendications précédentes, sous une forme portable pour l'inspection automatique de filetage et la mesure de plusieurs paramètres sur un filetage de tuyau (22) et équivalent in situ indépendamment du fait que le filetage soit interne ou externe sur le tuyau, comprenant :

(a) des moyens (28C, E) situés sur l'ensemble capteur (44) afin de générer un premier signal représentatif de l'erreur de hauteur de filetage,

(b) des moyens (28B, D, F) situés sur l'ensemble capteur (44) afin de générer un deuxième signal représentatif de l'erreur de pas du filetage,

(c) des moyens (46) situés sur l'ensemble capteur (44) afin de générer un troisième signal se rapportant à une conicité moyenne du filetage,

(d) les moyens de combinaison (36) recevant les premier, deuxième et troisième signaux et générant un affichage de l'erreur de hauteur de filetage, de l'erreur de pas du filetage et de la conicité moyenne du filetage se rapportant au filetage mesuré.

13. Outil selon la revendication 12, comprenant en outre des moyens situés sur l'ensemble capteur (44) afin de générer un quatrième signal représentatif de l'erreur de pas cumulée et des moyens associés à l'ensemble capteur afin de recevoir le quatrième signal et générer un affichage de l'erreur de pas cumulée.

14. Outil selon la revendication 12, comprenant en outre des moyens (46) situés sur l'ensemble capteur afin de générer des signaux représentatifs de la déviation du diamètre sur flancs sur un nombre donné d'intervalles du filetage et des moyens associés à l'ensemble capteur afin de recevoir les signaux de déviation de diamètre sur flancs et de les combiner avec le troisième signal de façon à produire une représentation de la non-linéarité du diamètre sur flancs de filetage.

15. Procédé de mesure automatique de la conicité d'un filetage de tuyau et équivalent in situ avec un outil (26) selon la revendication 2, caractérisé par les étapes de :

(a) mise en place de l'outil (26) sur le filetage (22) de la section de tuyau (24, 24') dans une première position,

(b) activation des moyens formant inclinomètre (46) par l'intermédiaire de moyens de commande afin de fournir une première mesure se rapportant à la conicité moyenne du filetage (22) par rapport à un plan,

(c) mémorisation de la première mesure,

(d) remise en place de l'outil (26) dans une position déplacée angulairement sur le filetage (22) par rapport à la première position,

(e) réactivation des moyens formant inclinomètre (46) par l'intermédiaire des moyens de commande afin de fournir une deuxième mesure se rapportant à la conicité moyenne du filetage (22) par rapport au plan de référence donné, et (f) soustraction de la deuxième mesure de la première mesure afin de déterminer la conicité moyenne du filetage (22).

16. Procédé selon la revendication 15, dans lequel l'ensemble capteur (44) comporte en outre un jeu de palpeurs (28B, D, F) qui mesure la déviation de diamètre sur flancs du filetage (22) à un nombre donné d'intervalles sur le filetage et comportant en outre les étapes d'activation de l'ensemble capteur (44) par l'intermédiaire des moyens de commande afin de déterminer la déviation de diamètre sur flancs au moyen des palpeurs à chaque intervalle lorsque l'outil (26) est à la fois installé et réinstallé sur le filetage, la conicité moyenne et la déviation de diamètre sur flancs étant mesurées afin de fournir une détermination de la non-linéarité du diamètre sur flancs.

17. Procédé selon la revendication 15, dans lequel l'étape de réinstallation de l'outil (26) positionne l'outil sur le tuyau approximativement à l'opposé de l'emplacement de l'outil lorsqu'il est installé pour la première fois sur la section de tuyau (24, 24').

18. Procédé selon la revendication 17, dans lequel l'outil (26) est installé approximativement à douze heure sur la section de tuyau (24, 24') et est réinstallé approximativement à six heure sur la section de tuyau.

19. Procédé selon la revendication 17, dans lequel l'outil (26) est installé à l'intérieur de approximativement plus ou moins 5 degré du point mort haut de la section de tuyau (24, 24') et est réinstallé à approximativement plus ou moins 5 degré du point mort bas de la section de tuyau.

20. Procédé de mesure automatique de l'erreur de hauteur, de l'erreur de pas, du pas cumulé, de la conicité moyenne, de la conicité d'intervalle et de la déviation de diamètre sur flancs d'un filetage de tuyau et équivalent in situ avec le même outil (26) selon la revendication 2, caractérisé par les étapes de :

(a) mise en place de l'outil (26) sur le filetage (22) de la section de tuyau (24, 24') dans une première position,

(b) activation de l'ensemble capteur (44) par l'intermédiaire de moyens de commande,

(c) mesure de l'erreur de hauteur du filetage (22) avec au moins un palpeur (28C, E) du jeu de palpeurs,

(d) mesure de l'erreur de pas du filetage (22) avec au moins un palpeur (28B, D, F) du jeu de palpeurs,

(e) activation des moyens formant inclinomètre (46) par l'intermédiaire des moyens de commande afin de fournir une première valeur se rapportant à la conicité moyenne du filetage (22) par rapport à un plan de référence donné,

(f) mesure de la déviation de diamètre sur flancs du filetage (22) pour un nombre donné d'intervalles sur le filetage,

(g) remise en place de l'outil (26) dans une position déplacée angulairement sur le filetage (22) par rapport à la première position,

(h) réactivation des moyens formant inclinomètre (46) par l'intermédiaire des moyens de commande afin de mesurer une deuxième valeur se rapportant à la conicité moyenne du filetage (22) par rapport au plan de référence donné,

(i) soustraction de la deuxième valeur de la première valeur afin de déterminer la conicité moyenne du filetage (22), et

(j) réactivation de l'ensemble capteur (44) par l'intermédiaire des moyens de commande afin de mesurer la déviation de diamètre sur flancs du filetage (22) pour le nombre donné d'intervalles lorsque l'outil (26) est remis en place sur le filetage (22).

21. Procédé selon la revendication 20, dans lequel les mesures sont déterminées simultanément pour chaque mise en place de l'outil (26) sur le filetage (22).

22. Procédé selon la revendication 20, dans lequel l'erreur de hauteur de filetage, l'erreur de pas du filetage et l'erreur de pas cumulée sont toutes de nouveau déterminées lorsque l'outil (26) est remis en place sur le filetage.

23. Procédé selon la revendication 22, dans lequel l'outil (26) comprend une imprimante et une illustration graphique de la non linéarité réelle du filetage (22) est imprimée sous la forme d'un tirage.

24. Procédé selon la revendication 20, comprenant l'étape de mesure de la valeur d'écartement entre le premier palpeur (28A) sur l'outil (26) et la fin de la section de tuyau (24, 24').

## Ansprüche

1. Gewindemeßwerkzeug mit einer Sensoranordnung (44) und Mitteln (42, 50, 40, 56, 53, 54) zum Fixieren der Sensoranordnung (44) an dem Gewinde (22) eines Rohrstückes (24, 24');

dadurch gekennzeichnet, daß die Sensoranordnung (44) ein Paar davon abstehende Stützstifte (28A, 28G) beinhaltet, die voneinander beabstandet sind, zum Berühren des Gewindes (22) und zum Abstützen der Sensoranordnung (44) auf dem Gewinde;

daß die Sensoranordnung (44) einen Satz Sonden (28B-F) zum Berühren des Gewindes (22) des Rohrstückes (24, 24') beinhaltet, welche gleitend in der Sensoranordnung montiert sind für Bewegungen in einer zur Längsachse des Rohrstückes (24, 24') normalen Richtung (Y) und für Translation in einer Richtung X parallel zur Achse des Rohrstückes;

daß eine der Sonden den Versatz in der normal zur Längsachse des Rohrstückes verlaufenden Richtung (Y) mißt und daß mindestens eine (28B, D F) der Sonden den Versatz in der parallel zur Achse des Rohrstückes liegenden Richtung (X) mißt;

und daß Kombinationsmittel (36) vorgesehen sind zum Kombinieren der Messungen des Sonden-Versatzes in der zur Längsachse des Rohrstückes normalen Richtung (Y) und parallelen Richtung (X) zum Berechnen unterschiedlicher Parameter des Gewindes des Rohrstückes (24, 24').

2. Gewindemeßwerkzeug (26) nach Anspruch 1,
dadurch gekennzeichnet, daß
ein Neigungsmesser (46) an der Sensoranordnung (44) angeordnet ist und zum Erfassen einer Konizität des Gewindes mit dem Kombinationsmittel (36) verbunden ist.

3. Gewindemeßwerkzeug nach Anspruch 1 oder 2,
gekennzeichnet durch einen ersten Satz Sonden (28C, E) mit wenigstens einer Sonde zur Messung des Fehlers in der Höhe des Gewindes (22), wenigstens einer Sonde des ersten Satzes Sonden, die gleitend in der Sensoranordnung montiert ist für Bewegungen in einer zur Längsachse des Rohrstückes normalen Richtung und für Translation in einer zur Achse des Rohrstückes parallelen Richtung, die axiale Translation gestattet die Ausrichtung von einzelnen Sonden zur korrespondierenden Rille des Gewindes, in welcher maximale vertikale Bewegungen für die Messung der Gewindehöhe auftreten können;
durch einen zweiten Satz Sonden (28B, D, F) zum Erfassen der Positionen der Rillen des Gewindes, mit wenigstens einer Sonde des zweiten Satzes, die in zwei Richtungen gleitend in der Sensoranordnung montiert ist und von denen eine normal zu der Achse des Rohrstückes und eine zweite parallel zu der Achse des Rohrstückes verläuft, es sind Mittel (78B, D, F; 79B, D, F) vorhanden, welche mit den Sonden des zweiten Satzes (28B, D, F) zur Messung des Versatzes jeder einzelnen Sonde in jeder der zwei Richtungen (Y, X) gekoppelt sind, um die Koordinaten der entsprechenden Rillen in normalen und axialen Komponenten zu erhalten;
und durch die Kombinationsmittel (36), welche die Messungen der Position in jeder der Koordinatenrichtungen kombinieren, um die Abweichung in der Flankenlinie des Rohrstückes und Fehler in der Steigung des Gewindes des Rohrstückes (24, 24') zu liefern.

4. Gewindemeßwerkzeug nach Anspruch 3,
dadurch gekennzeichnet, daß die Mittel zum Fixieren einen Arm (50) beinhalten, der drehbar (40) und beabstandet von den Sonden mit einem Endstück der Sensoranordnung (44) verbunden ist und unterhalb der Sensoranordnung verläuft und eine zweite Oberfläche der Wand des Rohrstückes (24, 24') gegenüber der (der Betrachtung) zugrunde liegenden Oberfläche an einem Punkt innerhalb des Bereiches zwischen dem Paar Stützstifte (28A, G) berührt, um Bewegungen der Sensoranordnung (44) relativ zum Gewinde (22) in einer Axial-Ebene des Oberstückes (24, 24') zu verhindern.

5. Gewindemeßwerkzeug nach Anspruch 4,
dadurch gekennzeichnet, daß der Arm (50) in einem Paar Kontaktelemente (53, 54) endet, welche auf einer der Ebene der Stützstife gegenüberliegenden Seite angeordnet sind um Bewegungen der Sensoranordnung (44) relativ zu dem Gewinde (22) in einer zur axialen Ebene normalen Richtung zu verhindern.

6. Gewindemeßwerkzeug nach Anspruch 3,
dadurch gekennzeichnet, daß die Sonden des ersten Satzes (28G, E) eine Sonde mit einem spitzen Kontakt (76) zum Einsetzen in einen tiefen Punkt einer Rille und einem Meßwertwandler (78C, E) zum Messen der Längsbewegung der Sonde umfassen, wobei die Längsbewegung dem Fehler in der Höhe des Gewindes (22) entspricht.

7. Gewindemeßwerkzeug nach Anspruch 3,
dadurch gekennzeichnet, daß jede der Sonden des zweiten Satzes (28B, D, F) einen Sensor mit einem Kugelkontakt (66) zum Einsetzen in eine Rille des Gewindes (22) und einen Meßwertwandler (78B, D, F) zum Messen von Längsbewegungen der Sonde beinhaltet, wobei die Längsbewegungen des zweiten Satzes von Sonden dem Versatz in der Flankenlinie entsprechen.

8. Gewindemeßwerkzeug nach Anspruch 7,
dadurch gekennzeichnet, daß das Kombinationsmittel (36) mit den Meßwertwandlern (78B, D, F) für die Längsbewegung der zweiten Sonden (28B, D, F) gekoppelt ist, wobei das Kombinationsmittel (36) die Abweichung in den Messungen überwacht und den Versatz der Flankenlinie liefert.

EP 0 156 140 B1

9. Gewindemeßwerkzeug nach Anspruch 7 oder 8,
dadurch gekennzeichnet, daß jede Sonde des zweiten Satzes (28B, D, F) weiterhin einen zweiten Meßwertwandler (79B, D, F), zum Messen von Querbewegungen der Sonden des zweiten Satzes umfaßt, wobei die Querbewegung jeder Sonde einem Wert eines Fehlers der Steigung entspricht.

10. Gewindemeßwerkzeug nach Anspruch 9,
dadurch gekennzeichnet, daß das Kombinationsmittel (36) mit den Meßwertwandlern für die Querbewegung des zweiten Satzes der Sonden (28B, D, F) gekoppelt ist, so daß das Kombinationsmittel (36) die Werte des Fehlers in der Steigung anzeigt.

11. Gewindemeßwerkzeug nach Anspruch 10,
dadurch gekennzeichnet, daß die Sonden des ersten Satzes (28C, E) und die Sonden des zweiten Satzes (28B, D, F) abwechselnd in einer Reihe parallel zu der Achse des Rohrstückes (24, 24') angeordnet sind.

12. Gewindemeßwerkzeug nach einem der vorstehenden Ansprüche, gekennzeichnet durch eine tragbare Ausführungsform zur automatischen Gewindeinspektion und zum Messen einer Mehrzahl von Parametern eines Rohrgewindes (22) und Ähnlichem in situ, unabhängig davon, ob das Gewinde innerhalb oder außerhalb des Rohres ist, mit:
(a) an der Sensoranordnung (44) angeordneten Mitteln (28C, E) zum Erzeugen eines ersten Signales entsprechend dem Fehler der Gewindehöhe,
(b) an der Sensoranordnung (44) angeordneten Mitteln (28B, D, F) zum Erzeugen eines zweiten Signales entsprechend dem Fehler der Gewindesteigung,
(c) an der Sensoranordnung (44) angeordnete Mittel (46) zum Erzeugen eines dritten Signales entsprechend der durchschnittlichen Konizität des Gewindes,
(d) den Kombinationsmitteln (36), welches das erste, zweite und dritte Signal empfangen und eine Anzeige des Fehlers der Gewindehöhe, des Fehlers der Gewindesteigung und der durchschnittlichen Gewinde-Konizität entsprechend des gemessenen Gewindes erzeugen.

13. Gewindemeßwerkzeug nach Anspruch 12,
gekennzeichnet durch Mittel an der Sensoranordnung (44) zum Erzeugen eines vierten Signales, welches dem kumulierten Steigungsfehler entspricht, und zu der Sensoranordnung zugehörige Mittel zum Empfangen des vierten Signals und zum Erzeugen einer Anzeige des kumulierten Steigungsfehlers.

14. Gewindemeßwerkzeug nach Anspruch 12,
gekennzeichnet durch Mittel an der Sensoranordnung zum Erzeugen von Signalen entsprechend dem Versatz der Flankenlinie über eine vorgegebene Anzahl von Gängen des Gewindes, und zu der Sensoranordnung zugehörige Mittel zum Empfangen des Flankenlinien-Versatzsignales und zur Kombination mit dem dritten Signal zur Erzeugung einer Darstellung der nicht Nichtliniarität der Flankenlinie des Gewindes.

15. Verfahren zur automatischen Messung der Konizität eines Rohrgewindes und Ähnlichem in situ mit einem Werkzeug (26) nach Anspruch 2,
gekennzeichnet durch die folgenden Schritte:
(a) Installieren des Werkzeuges (26) auf dem Gewinde (22) des Rohrstückes (24, 24') in einer ersten Position,
(b) Aktivieren des Neigungsmessers (46) durch ein Steuermittel zum Ausführen einer ersten Messung der durchschnittlichen Konizität des Gewindes (22), bezogen auf eine vorgegebene Referenzebene,
(c) Speichern der ersten Messung,
(d) Neuinstallieren des Werkzeuges an einer im Winkel von der ersten Position abweichenden Position auf dem Gewinde (22),
(e) Neuaktivieren des Neigungsmessers (46) durch das Steuermittel zum Ausführen einer zweiten Messung der durchschnittlichen Konizität des Gewindes (22), bezogen auf eine gegebene Referenzebene, und
(f) Subtrahieren der zweiten Messung von der ersten Messung zum Bestimmen der durchschnittlichen Konizität des Gewindes (22).

31

**16.** Verfahren nach Anspruch 15,
dadurch gekennzeichnet, daß die Sensoranordnung (44) zusätzlich einen Satz Sonden (28B, D, F) enthält, welche den Flankenlinienversatz des Gewindes (22) über eine gegebene Anzahl von Gängen des Gewindes messen und daß weiterhin die Schritte des Aktivierens der Sensoranordnung (44) durch Steuermittel zum Bestimmen des Flankenlinienversatzes durch die Sonden in jedem Intervall beinhaltet, wenn das Werkzeug (26) auf dem Gewinde (22) sowohl installiert wie auch neu installiert wird, wobei die durchschnittliche Konizität und der Flankenlinienversatz gemessen werden, um die Nichtlinearität der Flankenlinie bestimmen zu können.

**17.** Verfahren nach Anspruch 15,
dadurch gekennzeichnet, daß bei dem Schritt der Neuinstallation des Werkzeuges (26) das Werkzeug annähernd der Position gegenüber angeordnet wird, an der es bei der ersten Installation auf dem Rohrstück (24, 24') positioniert wird.

**18.** Verfahren nach Anspruch 17,
dadurch gekennzeichnet, daß das Werkzeug (26) in etwa an der zwölf Uhr-Position auf dem Rohrstück (24, 24') installiert wird und etwa an der sechs Uhr-Position auf dem Rohrstück neu installiert wird.

**19.** Verfahren nach Anspruch 17,
dadurch gekennzeichnet, daß das Werkzeug (26) innerhalb von plus oder minus 5° auf dem oberen Totpunkt des Rohrstückes (24, 24') installiert wird und neu installiert wird bei annähernd plus oder minus 5° vom unteren Totpunkt des Rohrstückes.

**20.** Verfahren zum automatischen Messen von Höhenfehler, Steigungsfehler, kumulierter Steigung, durchschnittlicher Konizität, Intervall-Konizität und Flankenlinienversatz eines Rohrgewindes und Ähnlichem in situ mit einem Werkzeug (26) nach Anspruch 2,
gekennzeichnet durch die Schritte:

(a) Installation des Werkzeuges (26) auf dem Gewinde (22) des Rohrstückes (24, 24') in einer ersten Position,

(b) Aktivierung der Sensoranordnung (44) durch Steuermittel,

(c) Messen des Höhenfehlers des Gewindes (22) mit wenigstens einer Sonde (28C, E) in dem Satz Sonden,

(d) Messen des Steigungsfehlers des Gewindes mit wenigstens einer anderen Sonde (28B, D, F) in dem Satz Sonden,

(e) Aktivieren des Neigungsmessers (46) durch Steuermittel und Messen und Speichern eines ersten Wertes bezogen auf die durchschnittliche Konizität des Gewindes (22) zu einer gegebenen Referenzebene,

(f) Messen des Flankenlinien-Versatzes des Gewindes (22) über eine gegebene Anzahl von Gängen des Gewindes,

(g) Neuinstallation des Werkzeuges (26) an einer von der ersten Position um einen Winkel verschiedenen Position auf dem Gewinde (22),

(h) Neuaktivierung des Neigungsmessers (46) durch das Steuermittel zum Messen eines zweiten Wertes betreffend die durchschnittliche Konizität des Gewindes (22) zu einer gegebenen Referenzebene,

(i) Subtraktion des zweiten Wertes von dem ersten Wert zur Bestimmung der durchschnittlichen Konizität des Gewindes (22),

(j) und Neuaktivierung der Sensoranordnung (44) durch die Steuermittel zum Messen des Flankenlinien-Versatzes des Gewindes (22) über eine vorgegebene Anzahl von Gängen, während das Werkzeug (26) auf dem Gewinde (22) neu installiert ist.

**21.** Verfahren nach Anspruch 20,
dadurch gekennzeichnet, daß die Messwerte bei jeder Installation des Werkzeuges (26) auf dem Gewinde (22) gleichzeitig bestimmt werden.

**22.** Verfahren nach Anspruch 20,
dadurch gekennzeichnet, daß Gewindehöhenfehler, Gewindesteigungsfehler und kumulativer Steigungsfehler nochmals bestimmt werden, wenn das Werkzeug (26) auf dem Gewinde neu installiert wird.

**23.** Verfahren nach Anspruch 22,
dadurch gekennzeichnet, daß das Werkzeug (26) einen Drucker beinhaltet und eine graphische Illustration der aktuellen Nichtlinearität des Gewindes (22) dadurch in Form einer Hardcopy gedruckt wird.

**24.** Verfahren nach Anspruch 20,
gekennzeichnet durch den Schritt des Messens des Betrages des Abstandes zwischen der ersten Sonde (28A) des Werkzeuges (26) und dem Ende des Rohrstückes (24, 24').

POWER

PRINTER

FIG. I.

SIGNAL PROCESSOR, 36

32

34

20

38

118

CONSOLE, 30

37

SENSOR ASSEMBLY, 44

INCLINOMETER, 46

42

PROBES, 28

24

48

53

56

54

58

50

52

60

40

26

22

# FIG. 2.

EP 0 156 140 B1

## FIG. 3.

78C'
201
207
211
209
205
203
212
208
210
214
206
202
204

## FIG. 6.

INCLINOMETER
( TOP READING)

A

B

TAPER

INCLINOMETER
( BOTTOM
READING)

TAPER = T = A−B

## FIG. 4.

211

42a

42

42

42

42

215

215

214

213

# FIG. 5A.

END OF PIPE     THREAD AREA OF PIPE     PIPE

| TRANS-DUCER NO. | TYPE | FUNCTION | DESIG-NATION |
|---|---|---|---|
| 1 | LVDT | LEAD 1 ST. INTERVAL | $X_1$ |
| 2 | LVDT | LEAD 2 ND. INTERVAL | $X_2$ |
| 3 | LVDT | LEAD 3 RD. INTERVAL | $X_3$ |
| 4 | LVDT | STANDOFF | $X_4$ |
| 5 | LVDT | CUMULATIVE LEAD | $X_5$ |
| 6 | LVDT | PITCH LINE DEVIATION 1 ST. INTERVAL | $Y_1$ |
| 7 | LVDT | PITCH LINE DEVIATION 2 ND. INTERVAL | $Y_2$ |
| 8 | LVDT | PITCH LINE DEVIATION 3 RD. INTERVAL | $Y_3$ |
| 9 | LVDT | THREAD HEIGHT | $H_1$ |
| 10 | LVDT | THREAD HEIGHT | $H_2$ |
| 11 | INCLINO-METER | AVERAGE TAPER | $I$ |

# FIG. 5 B.

## FIG. 7.

## FIG. 9.

## FIG. 8.

PROBE

PITCH LINE

PROBE CONTACTS THREADS AT PITCH LINE

PIPE AXIS

## FIG. IO.

1 ST. INTERVAL

2 ND. INTERVAL

3 RD. INTERVAL

4TH INTERVAL

$Y_{(1,1)} > 0$

$Y_{(1,2)} > 0$

$Y_{(1,1)} = 0$

$Y_{(1,2)} = 0$

$Y_{(1,3)} = 0$

$Y_{(1,3)} < 0$

TOP READING

$T_{(0,0)}$

$Y_{(2,1)} = 0$

$Y_{(2,2)} = 0$

$Y_{(2,3)} < 0$

BOTTOM READING

$Y_{(2,1)} > 0$

$Y_{(2,2)} > 0$

$Y_{(2,3)} = 0$

39

## FIG. 11.

COMPUTATIONS

| TAPER $\quad J=1 = $ TOP READING $\quad J=2 = $ BOTTOM READING | INTERVAL TAPER | LEAD $\quad J=1 = $ TOP $\quad J=2 = $ BOTT | DIA. DEVIATIONS (PITCH LINE NON-LINEARITY) | THREAD HEIGHT |
|---|---|---|---|---|
| $T_{(0,0)} = $ AVERAGE TAPER <br> $T_{(0,0)} = 5(\text{TAN } I_{(1)} - \text{TAN } I_{(2)})$ | | $X_{(J,5)}$ CUMULATIVE | TOP ; BOTTOM | $J=1 = $ TOP <br> $J=2 = $ BOTTOM |
| TAPER 1ST. INTERVAL <br> $T_{(J,1)} = \left[ \dfrac{Y_{(J,1)}}{1 - X_{(J,1)}} \right] + T_{(0,0)}$ | $T_{(1,1)} + T_{(2,1)}$ | $\dfrac{-X_{(J,1)}}{1.0}$ | $Y_{(1,1)} ; Y_{(2,1)}$ | |
| TAPER 2ND INTERVAL <br> $T_{(J,2)} = \left[ \dfrac{Y_{(J,2)} - Y_{(J,1)}}{1 + X_{(J,1)} - X_{(J,2)}} \right] + T_{(0,0)}$ | $T_{(1,2)} + T_{(2,2)}$ | $\dfrac{X_{(J,1)} - X_{(J,2)}}{1.0}$ | $Y_{(1,2)} ; Y_{(2,2)}$ | $HO_{(J,1)} = .07125 - H_{(J,1)}$ |
| TAPER 3RD INTERVAL <br> $T_{(J,3)} = \left[ \dfrac{Y_{(J,3)} - Y_{(J,2)}}{1 + X_{(J,2)} + X_{(J,3)}} \right] + T_{(0,0)}$ | $T_{(1,3)} + T_{(2,3)}$ | $\dfrac{X_{(J,2)} + X_{(J,3)}}{1.0}$ | $Y_{(1,3)} ; Y_{(2,3)}$ | $HO_{(J,2)} = .07125 - H_{(J2)}$ |

$H_{(1,2)} = $ TOP THREAD HEIGHT ERROR AT 2ND THREAD HEIGHT LOCATION

$H_{(2,2)} = $ BOTTOM THREAD HEIGHT ERROR AT 2ND THREAD HEIGHT LOCATION

$HO = $ ACTUAL THREAD HEIGHT

$H_{(1,1)} = $ TOP THREAD HEIGHT ERROR AT FIRST THREAD HEIGHT LOCATION

$H_{(2,1)} = $ BOTTOM THREAD HEIGHT ERROR AT FIRST THREAD HEIGHT LOCATION

NOTE:
.07125 = PERFECT OR THEORETICAL THREAD HEIGHT

EP 0 156 140 B1

## FIG. 12.

SWITCH ADJUSTMENT

+ 9VDC

216
220
221b

217

221a

TOP READING

INSTRUMENT UPRIGHT

221

221a

220
221b

-9VDC

100 Ω

221a

221b

BOTTOM READING

INSTRUMENT INVERTED

218

219

220

221b

221a

220

## FIG. 13.

42

28

53

54

56

50

40

24

## FIG. 14 A.

## FIG. 14 B.

## FIG. 14 C.

## FIG. 14 D.

## FIG. 16.

## FIG. 15.

STYLE 1 — COVERS 15 SIZES

STYLE 2 — COVERS 7 SIZES

STYLE 3 — COVERS 2 SIZES

## FIG. 17 A.

# FIG. 17 B.

# FIG. 17C.

## FIG. 18.

### THREAD INSPECTION

7" PIPE NO. 1

|      | TAPER<br>(IN./IN.) | LEAD ERROR<br>(IN./IN.) | |
| ---- | ------ | ------ | ------ |
| INT. |        | TOP    | BOTTOM |
| 1    | .0640 | − .0032 | − .0014 |
| 2    | .0610 | .0007 | − .0000 |
| 3    | .0606 | − .0017 | − .0012 |
| 4    | .0637 | .0048 | .0019 |

CUM LEAD ERROR
(IN.)

| TOP | BOTTOM |
| ----- | ----- |
| .0004 | .0010 |

THREAD HEIGHT
(IN.)

| LOC | TOP | BOTTOM |
| --- | ----- | ----- |
| 1 | .0744 | .0714 |
| 2 | .0714 | .0704 |

AVERAGE TAPER
(IN./IN.)
.0616

STANDOFF
(IN./IN.)

| TOP | BOTTOM |
| ----- | ----- |
| .390 | .328 |

DIAMETER DEVIATION
(IN.)

| LOC | TOP | BOTTOM |
| --- | ------ | ----- |
| 1 | .0004 | .0004 |
| 2 | − .0002 | .0004 |
| 3 | − .0006 | .0001 |

PROFILE